(19) Europäisches Patentamt
European Patent Office
Office européen des brevets

(11) EP 4 414 428 A1

(12) EUROPEAN PATENT APPLICATION
published in accordance with Art. 153(4) EPC

(43) Date of publication:
**14.08.2024 Bulletin 2024/33**

(21) Application number: **22878547.3**

(22) Date of filing: **05.10.2022**

(51) International Patent Classification (IPC):
***C09B 47/067*** (2006.01) ***C09B 47/18*** (2006.01)
***C09B 47/24*** (2006.01) ***C09B 47/30*** (2006.01)
***C09K 11/06*** (2006.01) ***C09B 57/00*** (2006.01)
***G01N 21/78*** (2006.01)

(52) Cooperative Patent Classification (CPC):
**C09B 47/067; C09B 47/18; C09B 47/24; C09B 47/30; C09B 57/00; C09K 11/06; G01N 21/78**

(86) International application number:
**PCT/JP2022/037255**

(87) International publication number:
**WO 2023/058679 (13.04.2023 Gazette 2023/15)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **05.10.2021 JP 2021164190**

(71) Applicant: **artience Co., Ltd.**
**Tokyo 104-8377 (JP)**

(72) Inventors:
- **YAMAMOTO Ryutaro**
  **Tokyo 104-8377 (JP)**
- **MINASHIMA Hidenori**
  **Tokyo 104-8377 (JP)**
- **KAWAUCHI Hiroaki**
  **Tokyo 104-8377 (JP)**

(74) Representative: **SSM Sandmair Patentanwälte Rechtsanwalt Partnerschaft mbB**
**Joseph-Wild-Straße 20**
**81829 München (DE)**

# (54) COLORANT FOR FLUORESCENT LABELING AND FLUORESCENT LABELING AGENT

(57) A colorant for fluorescent labeling which has an absorbance retention calculated with equation (I) of 0.5 or greater. When the colorant for fluorescent labeling is dissolved in an organic solvent and the resultant colorant solution is added to phosphate-buffered saline (PBS), then the resultant colorant dispersion (colorant dispersion I) contains dispersed colorant droplets formed therein which have an average droplet diameter of 500 nm or less. Equation (I): Absorbance retention = $A_1/A_0$ [In equation (I), $A_0$ indicates the absorbance, at a maximum-absorption wavelength, of the colorant solution (colorant solution I) obtained by dissolving the colorant for fluorescent labeling in the organic solvent and $A_1$ indicates the absorbance, at a maximum-absorption wavelength, of the colorant dispersion (colorant dispersion II) obtained by adding the solution of the colorant for fluorescent labeling to PBS, the colorant solution I and the colorant dispersion II being equal in colorant concentration.]

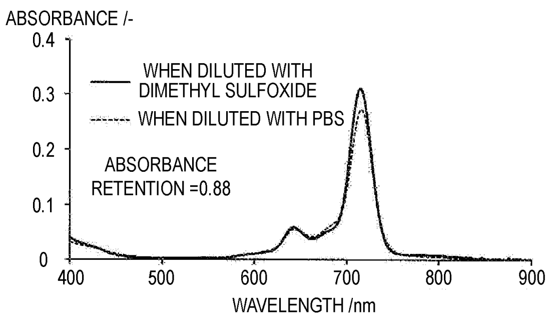


FIG. 1

EP 4 414 428 A1

## Description

[Technical Field]

Embodiments of the present invention relate to a colorant for fluorescent labeling and a fluorescent labeling agent containing a colorant for fluorescent labeling.

[Background Art]

Bioimaging is a technique that visualizes proteins, cells, and tissues, and for example, is widely used in biological and medical research fields such as elucidation of biological molecules and cell functions, drug discovery research, and the like.

Among these, a fluorescence bioimaging method is an imaging method that allows phenomenon dynamic observation, multicolor observation, and high-sensitivity observation. In recent years, fluorescence bioimaging methods have been focused upon as imaging methods that allow non-invasive diagnosis, and are expected to be applied in clinical settings such as image diagnosis with a smaller burden on patients and real time diagnosis during surgery.

For example, Patent Literature 1 describes a colorant for fluorescent labeling with a phthalocyanine framework.

For example, Patent Literature 2 describes a colorant for fluorescent labeling with a boron dipyrromethene (BODIPY) framework.

[Citation List]

[Patent Literature]

[Patent Literature 1]
PCT International Publication No. WO2004/038378
[Patent Literature 2]
Japanese Unexamined Patent Application Publication No. 2019-172826

[Summary of Invention]

[Technical Problem]

When fluorescence bioimaging is performed using the colorants for fluorescent labeling described in Patent Literature 1 and Patent Literature 2, colorants for fluorescent labeling cannot be used alone, and a pretreatment is necessary. Specifically, it is necessary to use a biological tissue recognition substance (antigens, biotin, etc.) that specifically binds to a specific biological tissue and a colorant for fluorescent labeling, which are combined in advance. Such a pretreatment for a colorant for fluorescent labeling leads to a significant increase in labor and experiment time in high-throughput screening with a large number of evaluation samples.

Here, the present invention provides a colorant for fluorescent labeling that does not require binding to a biological tissue recognition substance.

[Solution to Problem]

In order to address the above problems, the inventors conducted extensive studies, and as result, found a colorant for fluorescent labeling with excellent properties, and completed the present invention.

Specifically, embodiments of the present invention relate to the following. However, the present invention is not limited to the following embodiments, and includes various embodiments.

[I] A colorant for fluorescent labeling, in which a colorant dispersed component has an average particle size of 500 nm or less, and is formed as a colorant dispersion (colorant dispersion I) in which a colorant solution obtained by dissolving a colorant for fluorescent labeling in an organic solvent is added to phosphate buffered saline (PBS), and which has an absorbance retention calculated by the following Formula (I) of 0.5 or more:

$$\text{Formula (I)} \qquad \text{absorbance retention} = A_1/A_0$$

[in Formula (I), $A_0$ represents an absorbance at a maximum-absorption wavelength of a colorant solution (colorant solution I) obtained by dissolving a colorant for fluorescent labeling in an organic solvent, and $A_1$ represents an absorbance at a maximum-absorption wavelength of a colorant dispersion (colorant dispersion II) obtained by adding a colorant solution for fluorescent labeling to PBS, where, the colorant concentrations of the colorant solution I and the colorant dispersion II are the same].

[II] The colorant for fluorescent labeling according to [I], which is a phthalocyanine or boron dipyrromethene.

[III] The colorant for fluorescent labeling according to [I] or [II], which is represented by the following General Formula (1):

General Formula (1): $Q\text{-}Z\text{-}L^1\text{-}L^2\text{-}L^3$

[in the formula, Q represents a residue of the colorant for fluorescent labeling,

Z represents a direct bond, a substituted or unsubstituted alkylene group, or a substituted or unsubstituted arylene group,

$L^1$ represents a direct bond, -O-, $-OP(=O)R^1-$, -OC(=O)-, $-OS(=O)_2-$, $-OSiR^2R^3-$, -C(=O)-, or -C(=O)NH-,

$L^2$ represents one group selected from the group consisting of a substituted or unsubstituted alkylene group, a substituted or unsubstituted arylene group, and a substituted or unsubstituted heterocyclic group, or a group formed by combining these groups,

$L^3$ represents $-COOM^1$, $-NR^4R^5$, $-N^+R^6R^7R^8$, $-OM^2$, or $-P(=O)(OM^3)OM^4$,

$R^1$ represents a hydrogen atom, a hydroxyl group, a substituted or unsubstituted alkyl group, a substituted or unsubstituted aryl group, a substituted or unsubstituted alkoxy group, a substituted or unsubstituted aryloxy group, or a substituted or unsubstituted heterocyclic group,

$R^2$ and $R^3$ each independently represent a substituted or unsubstituted alkyl group, a substituted or unsubstituted aryl group, or a substituted or unsubstituted heterocyclic group,

$R^4$ to $R^8$ each independently represent a hydrogen atom, a substituted or unsubstituted alkyl group, or a substituted or unsubstituted aryl group, and

$M^1$, $M^2$, $M^3$, and $M^4$ each independently represent a hydrogen atom or a monovalent cation].

[IV] A fluorescent labeling agent containing the colorant for fluorescent labeling according to any one of [I] to [III].

Priority is claimed on Japanese Patent Application No. 2021-164190, filed October 5, 2021, the content of which is incorporated herein by reference.

[Advantageous Effects of Invention]

According to the embodiment of the present invention, it is possible to provide a colorant for fluorescent labeling suitable for fluorescence bioimaging that does not require a treatment of binding between a colorant for fluorescent labeling and a biological tissue recognition substance.

[Brief Description of Drawings]

[Fig. 1] Fig. 1 is an absorption spectrum when a colorant solution 7 containing 20 μM of a colorant for fluorescent labeling 7 was diluted 10-fold with dimethyl sulfoxide and PBS.

[Fig. 2] Fig. 2 is an absorption spectrum when a colorant solution 26 containing 20 μM of Comparative Compound 2 was diluted 10-fold with dimethyl sulfoxide and PBS.

[Fig. 3] Fig. 3 is an absorption spectrum when a colorant solution 30 containing 20 μM of Comparative Compound 6 was diluted 10-fold with dimethyl sulfoxide and PBS.

[Fig. 4] Fig. 4 is an image observed under a fluorescence microscope when cells were stained using a colorant for fluorescent labeling 7 (magnification: 40x, fluorescence capture time: 1 second).

[Fig. 5] Fig. 5 is an image observed under a fluorescence microscope when cells were stained using Comparative Compound 2 (magnification: 40x, fluorescence capture time: 1 second).

[Fig. 6] Fig. 6 is an image observed under a fluorescence microscope when cells were stained using Comparative Compound 6 (magnification: 40x, fluorescence capture time: 1 second).

[Description of Embodiments]

Hereinafter, embodiments of the present invention will be described in detail. However, the embodiments of the present invention are not limited to the following description, and include various embodiments.
A colorant for fluorescent labeling according to one embodiment of the present invention is a colorant dispersed component having an average particle size of 500 nm or less in a colorant dispersion I, and has an absorbance retention calculated by the following Formula (I) of 0.5 or more:

$$\text{Formula (I)} \qquad \text{absorbance retention} = A_1/A_0$$

Here, the colorant dispersion I is a colorant dispersion obtained by mixing a colorant for fluorescent labeling, an organic solvent, and phosphate buffered saline (PBS). For example, the colorant dispersion I can be formed by adding a colorant solution in which a colorant for fluorescent labeling is dissolved in an organic solvent to PBS, and performing mixing. The colorant dispersed component is a colorant that is not completely dissolved in a medium in the colorant dispersion I but is dispersed, in which a plurality of colorant molecules are aggregated by weak intermolecular forces.
In addition, in Formula (I), $A_0$ represents an absorbance at a maximum-absorption wavelength of a colorant solution for fluorescent labeling (colorant solution I) obtained by dissolving a colorant for fluorescent labeling in an organic solvent, and $A_1$ represents an absorbance at a maximum-absorption wavelength of a colorant dispersion (colorant dispersion II) obtained by adding a colorant solution for fluorescent labeling to PBS. Here, the colorant concentrations of the colorant solution I and the colorant dispersion II are the same.
According to studies by the inventors, the reason why the colorant for fluorescent labeling of the present invention has the above effects is speculated to be as follows. In consideration of cell staining, it is preferable to maintain the colorant used for fluorescent labeling in a state in which it can be taken up by an endocytosis mechanism in an aqueous solution with an ion concentration close to that in living organisms. Phosphate buffered saline (PBS) is a buffer solution composed of ions commonly found in living organisms. Therefore, in the present invention, the average particle size of the colorant dispersed component and the absorbance of the colorant in an aqueous solution such as PBS that has an ion concentration close to that of living organisms have been focused on. Specifically, in the colorant for fluorescent labeling according to the present invention, in a colorant dispersion (colorant dispersion I) in which a colorant solution obtained by dissolving a colorant in an organic solvent is added to and mixed with PBS, the average particle size of the colorant dispersed component is 500 nm or less, and it is thought that this made cell membrane permeation by the endocytosis mechanism more likely to occur. Here, the colorant dispersed component is a colorant that is not completely dissolved in a medium but is dispersed, in which a plurality of colorant molecules are aggregated by weak intermolecular forces and act as one particle unit. For this reason, in the colorant for fluorescent labeling according to the present invention, since the average particle size of the colorant dispersed component formed when dispersed in PBS is 500 nm or less, it is thought that the colorant causes strong cell staining and can be suitably used as a cell staining colorant.
The average particle size of the colorant dispersed component formed when the colorant for fluorescent labeling is dispersed in PBS is 500 nm or less, preferably 400 nm or less, and more preferably 200 nm or less. On the other hand, the average particle size of the colorant dispersed component formed when dispersed in PBS is preferably 5 nm or more. In this regard, in one embodiment, the average particle size of the colorant for fluorescent labeling in the colorant dispersed component is preferably 5 to 500 nm, more preferably 5 to 400 nm, and still more preferably 5 to 200 nm.
The average particle size of the colorant dispersed component contained in the colorant dispersion I can be measured as follows.
A colorant solution is obtained by dissolving a colorant for fluorescent labeling in an organic solvent that can dissolve the colorant for fluorescent labeling so that the concentration is 20 μM. The colorant solution is diluted 10-fold with PBS and mixed to prepare a colorant dispersion I with a concentration of 2 μM.
Here, the method of mixing the colorant solution and the PBS is not particularly limited, and for example, a method of adding a colorant solution to PBS is preferable. Mixing may be performed separately in a plurality of steps. The method of mixing a colorant solution and PBS is not particularly limited, and a method that can quickly achieve a uniform mixing state is desirable. As an example of the mixing method, mixing can be performed by well-known methods such as stirring with a stirrer, pipetting with a pipette, and using a Vortex mixer. The colorant dispersion I can be obtained, for example, by diluting a colorant solution 10-fold with PBS at 25°C and mixing by pipetting 10 times or more.
The particle size distribution of the colorant dispersion I obtained as above is measured using a particle size distribution measuring device (Zetasizer Nano ZSP, commercially available from Spectris). It is preferable to measure the average particle size under conditions at 25°C. It is desirable to measure the average particle size within 5 minutes after the colorant dispersion I is prepared.
As the value of the average particle size, values such as a Z average particle size, a number average particle size, a volume average particle size, and an area average particle size can be used. In the present invention, the Z

average particle size measured by a dynamic light scattering method is defined as the average particle size of the colorant dispersed component contained in the colorant dispersion I.

In addition, when the absorbance of the colorant for fluorescent labeling in the colorant dispersion decreases, since the absorption rate of excitation light decreases, it is thought that the fluorescence intensity during cell staining decreases. Therefore, in the present invention, the ratio (absorbance retention) of the absorbance $A_1$ when the colorant for fluorescent labeling is dispersed in PBS to the absorbance $A_0$ when the colorant for fluorescent labeling is dissolved in an organic solvent is a certain value or more. When the absorbance retention is higher, the fluorescence intensity during cell staining is higher, and it can be suitably used as a colorant for fluorescent labeling.

In one embodiment, in the colorant for fluorescent labeling of the present invention, the absorbance retention calculated by Formula (I) is 0.5 or more, preferably 0.6 or more, and more preferably 0.7 or more.

As the organic solvent in which the colorant for fluorescent labeling is soluble, an organic solvent that is miscible with water is preferable. Among these, dimethyl sulfoxide and ethanol are preferable, and dimethyl sulfoxide is particularly preferable.

The absorbance retention calculated by Formula (I) is calculated as follows.

A colorant solution I is prepared by dissolving the colorant for fluorescent labeling in a soluble organic solvent so that the concentration is 2 $\mu$M. The absorption spectrum of the colorant solution I is measured using a spectrophotometer (U-4100, commercially available from Hitachi High-Tech Corporation), and the absorbance $A_0$ at a maximum-absorption wavelength is determined.

In addition, a colorant dispersion II is prepared by dissolving the colorant for fluorescent labeling in a soluble organic solvent so that the concentration is 20 $\mu$M, and this is additionally diluted 10-fold with PBS so that the concentration is 2 $\mu$M. The absorption spectrum of the colorant dispersion II is measured using a spectrophotometer (U-4100, commercially available from Hitachi High-Tech Corporation), and the absorbance $A_1$ at a maximum-absorption wavelength is determined. It is preferable to measure the absorbance under conditions at 25°C. In addition, it is desirable to measure the absorbance within 5 minutes after the colorant dispersion I is prepared. The colorant dispersion II can be obtained, for example, by diluting a colorant solution 10-fold with PBS at 25°C and mixing by pipetting 10 times or more.

In this specification, the colorant for fluorescent labeling is a colorant that emits fluorescence when light in the ultraviolet range to near infrared range (for example, light with a wavelength of 400 to 1,500 nm) is emitted, and may be a known compound. The fluorescent colorant constituting the colorant for fluorescent labeling is not particularly limited, and examples thereof include colorants such as fluoresceins, rhodamines, coumarins, cyanines, phthalocyanines, diketo-pyrrolo-pyrroles, boron dipyrromethenes (BODIPY), xanthenes, pyrenes, merocyanines, perylenes, stilbenes, pyrromethenes, acridines, and porphyrins and umbelliferones.

In one embodiment, the colorant for fluorescent labeling is preferably a colorant for fluorescent labeling represented by the following General Formula (1).

General Formula (1): $Q\text{-}Z\text{-}L^1\text{-}L^2\text{-}L^3$

(in the formula, Q represents a residue of the colorant for fluorescent labeling,

Z represents a direct bond, a substituted or unsubstituted alkylene group, or a substituted or unsubstituted arylene group,

$L^1$ represents a direct bond, -O-, $-OP(=O)R^1-$, -OC(=O)-, $-OS(=O)_2-$, $-OSiR^2R^3-$, -C(=O)-, or -C(=O)NH-,

$L^2$ represents one group selected from the group consisting of a substituted or unsubstituted alkylene group, a substituted or unsubstituted arylene group, and a substituted or unsubstituted heterocyclic group, or a group formed by combining these groups,

$L^3$ represents $-COOM^1$, $-NR^4R^5$, $-N^+R^6R^7R^8$, $-OM^2$, or $-P(=O)(OM^3)OM^4$,

$R^1$ represents a hydrogen atom, a hydroxyl group, a substituted or unsubstituted alkyl group, a substituted or unsubstituted aryl group, a substituted or unsubstituted alkoxy group, a substituted or unsubstituted aryloxy group, or a substituted or unsubstituted heterocyclic group,

$R^2$ and $R^3$ each independently represent a substituted or unsubstituted alkyl group, a substituted or unsubstituted aryl group, or a substituted or unsubstituted heterocyclic group,

$R^4$ to $R^8$ each independently represent a hydrogen atom, a substituted or unsubstituted alkyl group, or a substituted or unsubstituted aryl group, and

$M^1$, $M^2$, $M^3$, and $M^4$ each independently represent a hydrogen atom or a monovalent cation).

In the colorant for fluorescent labeling of the above embodiment, "$-Z\text{-}L^1\text{-}L^2\text{-}L^3$" is a substituent having a hydrophilic group, and can improve an electrostatic interaction with a hydrophilic group of the phospholipid. A specific structure of the substituent is as follows.

Z represents a direct bond, a substituted or unsubstituted alkylene group, or a substituted or unsubstituted

arylene group. In one embodiment, Z is preferably a direct bond.

$L^1$ represents a direct bond, -O-, -OP(=O)$R^1$-, -OC(=O)-, -OS(=O)$_2$-, -OSi$R^2R^3$-, -C(=O)-, or -C(=O)NH-. In one embodiment, $R^1$ is preferably -OP(=O)$R^1$-, -OS(=O)$_2$-, or -OSi$R^2R^3$-.

$L^2$ represents one group selected from the group consisting of a substituted or unsubstituted alkylene group, a substituted or unsubstituted arylene group, and a substituted or unsubstituted heterocyclic group, or a group formed by combining these groups. In one embodiment, $L^2$ is preferably a substituted or unsubstituted alkylene group or a substituted or unsubstituted arylene group, and more preferably a substituted or unsubstituted alkylene group. In one embodiment, $L^2$ is preferably an alkylene group. The main chain of the alkylene group preferably has 1 to 10 carbon atoms.

$L^3$ represents -COO$M^1$, -N$R^4R^5$, -$N^+R^6R^7R^8$, -O$M^2$, or -P(=O)(O$M^3$)O$M^4$. In one embodiment, $R^3$ is preferably -COO$M^1$, -O$M^2$, or -P(=O)(O$M_3$)O$M_4$.

In the above, $R^1$ represents a hydrogen atom, a hydroxyl group, a substituted or unsubstituted alkyl group, a substituted or unsubstituted aryl group, a substituted or unsubstituted alkoxy group, a substituted or unsubstituted aryloxy group, or a substituted or unsubstituted heterocyclic group. In one embodiment, $R^1$ is preferably a hydrogen atom, a hydroxyl group, a substituted or unsubstituted alkyl group, or an unsubstituted aryl group.

$R^2$ and $R^3$ each independently represent a substituted or unsubstituted alkyl group, a substituted or unsubstituted aryl group, or a substituted or unsubstituted heterocyclic group. In one embodiment, $R^2$ and $R^3$ are each independently preferably a substituted or unsubstituted alkyl group, or an unsubstituted aryl group. The alkyl group is more preferably a linear or branched alkyl group having 1 to 5 carbon atoms.

$R^4$ to $R^8$ each independently represent a hydrogen atom, a substituted or unsubstituted alkyl group, or a substituted or unsubstituted aryl group. In one embodiment, $R^4$ to $R^8$ are each independently preferably a hydrogen atom or a substituted or unsubstituted alkyl group. The alkyl group is more preferably a linear or branched alkyl group having 1 to 5 carbon atoms.

$M^1$, $M^2$, $M^3$, and $M^4$ each independently represent a hydrogen atom or a monovalent cation. Examples of monovalent cations include alkali metals and quaternary amines. Examples of alkali metals include lithium, sodium, potassium, rubidium, and cesium. In one embodiment, $M^1$, $M^2$, $M^3$, and $M^4$ are each preferably a hydrogen atom.

The fluorescent colorant constituting the colorant for fluorescent labeling according to one embodiment is preferably phthalocyanines or boron dipyrromethenes in consideration of biopermeability of fluorescence emitted from the fluorescent colorant. In addition, phthalocyanines are preferably in consideration of light resistance.

In one embodiment, phthalocyanines represented by the following General Formula (2) can be suitably used as the colorant for fluorescent labeling. When the fluorescent colorant constituting the colorant for fluorescent labeling contains a compound represented by the following General Formula (2), it is possible to easily emit light at a wavelength suitable for bioimaging in vitro and in vivo (for example, 650 to 900 nm), which is derived from a colorant framework.

[Chem. 1]

General Formula (2)

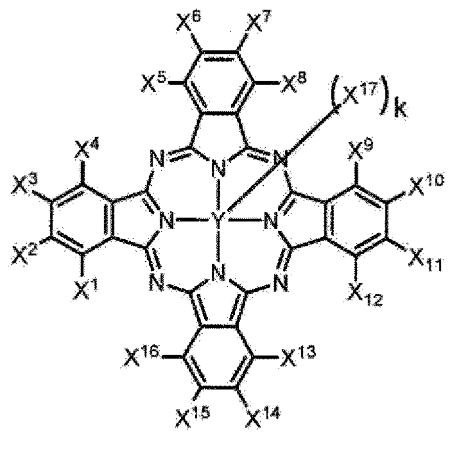

In General Formula (2), $X^1$ to $X^{16}$ each independently represent a hydrogen atom or a substituent selected from the group consisting of -Z-$L^1$-$L^2$-$L^3$, a substituted or unsubstituted alkyl group, a substituted or unsubstituted aryl group, a substituted or unsubstituted cycloalkyl group, a substituted or unsubstituted alkenyl group, a substituted or unsubstituted heterocyclic group, -AB, and -COO$M^5$.

In the above, $M^5$'s each independently represent a monovalent cation. Examples of monovalent cations include

a hydrogen atom, alkali metals, and quaternary amines. Examples of alkali metals include lithium, sodium, potassium, rubidium, and cesium.

In one embodiment, at least one of $X^1$ to $X^{16}$, and preferably 4 or more thereof is preferably the above substituents. In one embodiment, the substituents for the colorant framework are each independently preferably a substituted or unsubstituted alkyl group, a substituted or unsubstituted aryl group, or -AB.

In the above Formula -AB, A represents a Group 16 element. Examples of Group 16 elements include oxygen, sulfur, selenium, and tellurium. In one embodiment, A is preferably oxygen, sulfur, or selenium. In consideration of ease of synthesis and stability, oxygen or sulfur is more preferable. In consideration of the fluorescence intensity, oxygen is still more preferable. B represents a hydrogen atom, a substituted or unsubstituted alkyl group, a substituted or unsubstituted aryl group, a substituted or unsubstituted cycloalkyl group, or a substituted or unsubstituted heterocyclic group. In one embodiment, B is preferably a hydrogen atom, a substituted or unsubstituted alkyl group, or a substituted or unsubstituted aryl group.

Therefore, in one embodiment, -AB is preferably -OR, -OAr, -SR, or -SAr. Here, R represents an alkyl group, and Ar represents an aryl group. In consideration of cell membrane permeability, -AB is preferably -OR or -SR, and additionally, the alkyl group is more preferably a linear or branched alkyl group having 1 to 5 carbon atoms. In the above -OR or -SR, when the carbon chain of R is shorter, the average particle size during dispersion tends to be smaller.

In General Formula (2), Y represents a divalent to pentavalent metal atom, and k is an integer. When Y is a divalent metal atom, k is 0, when Y is a trivalent metal atom, k is 1, and when Y is a tetravalent or pentavalent metal atom, k is 2.

Examples of divalent metal atoms include Mg, Cu, and Zn. Examples of trivalent metal atoms include Al, Ga, and In. Examples of tetravalent metal atoms include Si, Mn, Sn, Cr, and Zr. Examples of pentavalent metal atoms include P.

In consideration of the fluorescence intensity, Y is preferably Mg, Zn, Al, Si, or P, and in consideration of light resistance, Al or Si is preferable.

In one embodiment, adjacent substituents for $X^1$ to $X^{16}$ may be connected to each other to form a ring. The structure of the ring may be a cycloalkyl, cycloalkene, aryl, or heteroaryl group, and forms a condensed ring with an aromatic ring in the phthalocyanine framework. The structure of the ring may further have a substituent or may be unsubstituted. The number of carbon atoms forming the structure of the ring may be 2 to 30, and preferably in a range of 4 to 6. The ring is preferably a 5-membered ring or a 6-membered ring.

In one embodiment, adjacent substituents are preferably connected to each other to form a phenylene group. In this case, it binds with an aromatic ring in the phthalocyanine framework to form a naphthalene structure. In other embodiments, adjacent substituents may be connected to each other to form a ring containing a nitrogen atom. In this case, it binds with an aromatic ring in the phthalocyanine framework to form, for example, an imidazole structure. The ring structure such as the above naphthalene structure or imidazole structure may further have a substituent such as an alkyl group or an aryl group.

$X^{17}$ represents $-Z-L^1-L^2-L^3$, a hydroxyl group, a halogen element, a substituted or unsubstituted alkoxy group, a substituted or unsubstituted aryloxy group, - $OP(=O)V^1V^2$, $-OC(=O)V^3$, $-OS(=O)_2V^4$, or $-OSiV^5V^6V^7$. In one embodiment, $X^1{}_7$ is preferably $-Z-L^1-L^2-L^3$ or a hydroxyl group. Z, $L^1$, $L^2$, and $L^3$ are as described above.

In the above, $V^1$ and $V^2$ each independently represent a hydrogen atom, a hydroxyl group, a substituted or unsubstituted alkyl group, a substituted or unsubstituted aryl group, a substituted or unsubstituted alkoxy group, a substituted or unsubstituted aryloxy group, or a substituted or unsubstituted heterocyclic group.

$V^3$ represents a hydrogen atom, a substituted or unsubstituted alkyl group, a substituted or unsubstituted aryl group, or a substituted or unsubstituted heterocyclic group.

$V^4$ represents a hydroxyl group, a substituted or unsubstituted alkyl group, a substituted or unsubstituted aryl group, or a substituted or unsubstituted heterocyclic group.

$V^5$ to $V^7$ each independently represent a substituted or unsubstituted alkyl group, a substituted or unsubstituted aryl group, or a substituted or unsubstituted heterocyclic group.

In one embodiment, boron dipyrromethenes represented by the following General Formula (3) or (4) can be suitably used as the colorant for fluorescent labeling. When the fluorescent colorant constituting the colorant for fluorescent labeling contains a compound represented by the following General Formula (3) or (4), it is possible to easily emit light at a wavelength suitable for bioimaging in vitro and in vivo (for example, 650 to 900 nm), which is derived from a colorant framework.

[Chem. 2]

General Formula (3)

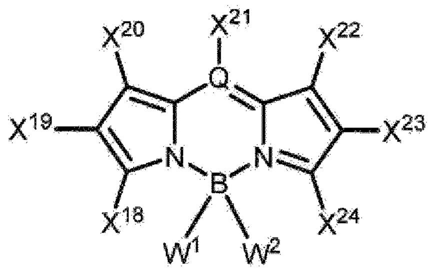

[Chem. 3]

General Formula (4)

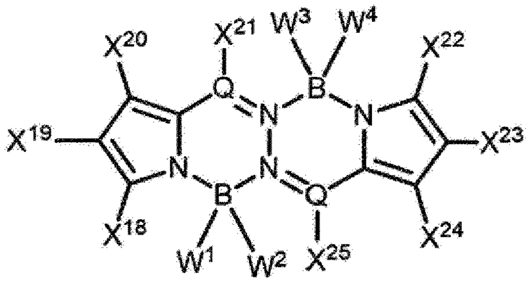

In the formula, $X^{18}$ to $X^{25}$ each independently represent a hydrogen atom, a halogen atom, a substituted or unsubstituted alkyl group, or a substituted or unsubstituted aryl group. $X^{18}$ and $X^{19}$, $X^{19}$ and $X^{20}$, $X^{22}$ and $X^{23}$, and $X^{23}$ and $X^{24}$ cooperate with each other to form a 5-membered or 6-membered heterocycle including at least one hetero atom selected from among sulfur, oxygen, nitrogen and phosphorus or to form a 6-membered benzene ring composed of only carbon atoms. The substituent on the formed ring has any selected from among $-Z-L^1-L^2-L^3$, a hydrogen atom, and a halogen atom. Z, $L^1$, $L^2$, and $L^3$ are as described above.

In one embodiment, it is preferable that $X^{18}$ and $X^{19}$, and/or $X^{23}$ and $X^{24}$ be condensed to form a 5-membered heterocycle or 6-membered benzene ring. In addition, in one embodiment, it is preferable that $X^{18}$ and $X^{19}$, and/or $X^{23}$ and $X^{24}$ be condensed to form a 5-membered heterocycle including an oxygen atom.

$W^1$ to $W^4$ each independently represent a halogen atom, an alkyl group, an aryl group, a heterocyclic group, a hydroxy group, an alkoxy group, an aryloxy group, an alkylthio group, an arylthio group, an alkenyl group, or an alkynyl group, and these may have a substituent. $W^1$ and $W^2$, and $W^3$ and $W^4$ may be connected to each other to form a ring. In one embodiment, $W^1$ to $W^4$ are preferably a halogen atom.

Q represents a carbon atom or a nitrogen atom. However, when Q is a nitrogen atom, $R^4$ and $R^8$ are not present. In one embodiment, Q is preferably a carbon atom.

The alkyl groups in General Formula (2), General Formula (3), and General Formula (4) are each independently selected. The alkyl group may have a substituent or may be unsubstituted.

Examples of alkyl groups include linear or branched alkyl groups. Specific examples include a methyl group, ethyl group, propyl group, butyl group, pentyl group, hexyl group, heptyl group, octyl group, nonyl group, decyl group, dodecyl group, octadecyl group, isopropyl group, isobutyl group, isopentyl group, 2-ethylhexyl group, sec-butyl group, tert-butyl group, sec-pentyl group, tert-pentyl group, tert-octyl group, and neopentyl group. The number of carbon atoms in the alkyl group is preferably in a range of 1 to 30. The number of carbon atoms is more preferably in a range of 1 to 20 and still more preferably in a range of 1 to 5.

Examples of substituents for the alkyl group include halogen atoms such as fluorine, chlorine, and bromine, a hydroxyl group, an amino group, a nitro group, a formyl group, a cyano group, and a carboxyl group as wells as the above alkyl groups, and an aryl group, a cycloalkyl group, and a heterocyclic group to be described below. In addition, when a part of the structure is substituted with an amide bond (-NHCO-), an ester bond (-COO-), an ether bond (-O-),

a urea bond (-NHCONH-), or a urethane bond (-NHCOO-), the substituted moiety is also considered as a "substituent."

Therefore, the substituted alkyl group refers to an alkyl group substituted with the above substituent. The substituted alkyl group may be an alkyl group substituted with one, two or more substituents. Specific examples of alkyl groups substituted with a halogen atom include trifluoromethyl group, 2,2,2-trifluoroethyl group, $-(CF_2)_4CF_3$, $-(CF_2)_5CF_3$, $-(CF_2)_6CF_3$, $-(CF_2)_7CF_3$, $-(CF_2)_8CF_3$, trichloromethyl group, and 2,2-dibromoethyl group.

Specific examples of alkyl groups substituted with an amide bond include $-CH_2-CH_2-CH_2-NHCO-CH_2-CH_3$, $-CH_2-CH(-CH_3)-CH_2-NHCO-CH_2-CH_3$, $-CH_2-CH_2-CH_2-NHCO-CH_2-CH_3$, $-CH_2-CH_2-CH_2-CH_2-NHCO-CH_2-CH(CH_2-CH_3)-CH_2-CH_2-CH_2-CH_3$, $-(CH_2)_5-NHCO-(CH_2)_{II}-CH_3$, and $-CH_2-CH_2-CH_2-C(-NHCO-CH_2-CH_3)_3$. The number of carbon atoms in the alkyl group substituted with an amide bond is preferably in a range of 2 to 30. The number of carbon atoms is more preferably in a range of 2 to 10 and still more preferably in a range of 2 to 5.

Specific examples of alkyl groups substituted with an ester bond include $-CH_2-CH_2-CH_2-COO-CH_2-CH_3$, $-CH_2-CH(-CH_3)-CH_2-COO-CH_2-CH_3$, $-CH_2-CH_2-CH_2-OCO-CH_2-CH_3$, $-CH_2-CH_2-CH_2-CH_2-COO-CH_2-CH(CH_2-CH_3)-CH_2-CH_2-CH_2-CH_3$, $-(CH_2)_5-COO-(CH_2)_{11}-CH_3$, and $-CH_2-CH_2-CH_2-CH-(COO-CH_2-CH_3)_2$. The number of carbon atoms in the alkyl group substituted with an ester bond is preferably in a range of 2 to 30. The number of carbon atoms is more preferably in a range of 2 to 10 and still more preferably in a range of 2 to 5.

Specific examples of alkyl groups substituted with an ether bond include $-CH_2-O-CH_3$, $-CH_2-CH_2-O-CH_2-CH_3$, $-CH_2-CH_2-CH_2-O-CH_2-CH_3$, $-(CH_2-CH_2-O)_n-CH_3$ (where n is an integer of 1 to 8), $-(CH_2-CH_2-CH_2-O)_m-CH_3$ (where m is an integer of 1 to 5), $-CH_2-CH(CH_3)-O-CH_2-CH_3-$, and $-CH_2-CH-(OCH_3)_2$, but the present invention is not limited thereto. The number of carbon atoms in the alkyl group substituted with an ether bond is preferably in a range of 2 to 30. The number of carbon atoms is more preferably in a range of 2 to 10 and still more preferably in a range of 2 to 5.

Specific examples of alkyl groups substituted with a urea bond (-NHCONH-) include $-CH_2-NHCONH-CH_3$, $-CH_2-CH_2-NHCONH-CH_2-CH_3$, $-CH_2-CH_2-CH_2-NHCONH-CH_2-CH_3$, $-(CH_2-CH_2-NHCONH)_n-CH_3$(where n is an integer of 1 to 8), $-(CH_2-CH_2-CH_2-NHCONH)_m-CH_3$(where m is an integer of 1 to 5), and $-CH_2-CH(CH_3)-NHCONH-CH_2-CH_3-$, $-CH_2-CH-(NHCONHCH_3)_2$, but the present invention is not limited thereto. The number of carbon atoms in the alkyl group substituted with a urea bond is preferably in a range of 2 to 30. The number of carbon atoms is more preferably in a range of 2 to 10 and still more preferably in a range of 2 to 5.

Specific examples of alkyl groups substituted with a urethane bond include $-CH_2-CH_2-CH_2-NHCOO-CH_2-CH_3$, $-CH_2-CH(-CH_3)-CH_2-NHCOO-CH_2-CH_3$, $-CH_2-CH_2-CH_2-NHCOO-CH_2-CH_3$, $-CH_2-CH_2-CH_2-CH_2-NHCOO-CH_2-CH(CH_2-CH_3)-CH_2-CH_2-CH_2-CH_3$, $-(CH_2)_5-NHCOO-(CH_2)_{11}-CH_3$, and $-CH_2-CH_2-CH_2-CH-(NHCOO-CH_2-CH_3)_2$. The number of carbon atoms in the alkyl group substituted with a urethane bond is preferably in a range of 2 to 30. The number of carbon atoms is more preferably in a range of 2 to 10 and still more preferably in a range of 2 to 5.

Specific examples of alkyl groups substituted with two or more substituents among an amide bond (-NHCO-), an ester bond (-COO-), an ether bond (-O-), a urea bond (-NHCONH-), and a urethane bond (-NHCOO-) include $-CH_2-CH_2-NHCO-CH_2-CH_2-O-CH_2-CH(CH_2-CH_3)-CH_2-CH_2-CH_2-CH_3$, $-CH_2-CH_2-COO-CH_2-CH_2-O-CH_2-CH_2-NH-COO-CH_2-CH(CH_2-CH_3)-CH_2-CH_2-CH_2-CH_3$, and $-CH_2-CH_2-NHCO-CH_2(OCO-CH_2)-CH_2-$. The number of carbon atoms in the alkyl group substituted with two or more substituents among an amide bond (-NHCO-), an ester bond (-COO-), an ether bond (-O-), a urea bond (-NHCONH-), and a urethane bond (-NHCOO-) is preferably in a range of 3 to 30. The number of carbon atoms is more preferably in a range of 3 to 10 and still more preferably in a range of 3 to 5.

The aryl groups in General Formula (2), General Formula (3), and General Formula (4) are each independently selected. The aryl group may have a substituent or may be unsubstituted.

Examples of aryl groups include monocyclic or fused polycyclic aryl groups. Examples thereof include a phenyl group, 1-naphthyl group, 2-naphthyl group, p-biphenyl group, m-biphenyl group, 2-anthryl group, 9-anthryl group, 2-phenanthryl group, 3-phenanthryl group, 9-phenanthryl group, 2-fluorenyl group, 3-fluorenyl group, 9-fluorenyl group, 1-pyrenyl group, 2-pyrenyl group, 3-perylenyl group, o-tolyl group, m-tolyl group, p-tolyl group, 4-methylbiphenylgroup, terphenyl group, 4-methyl-1-naphthyl group, 4-tert-butyl-1-naphthyl group, 4-naphthyl-1-naphthyl group, 6-phenyl-2-naphthyl group, 10-phenyl-9-anthryl group, spirofluorenyl group, and 2-benzocyclobutenyl group. The number of carbon atoms in the aryl group is preferably in a range of 6 to 18. The number of carbon atoms is more preferably in a range of 6 to 10.

The substituents for the substituted aryl group may be the same as the substituents exemplified as the substituents for the alkyl group.

The cycloalkyl groups in General Formula (2), General Formula (3), and General Formula (4) are each independently selected. The cycloalkyl group may have a substituent or may be unsubstituted. Examples of cycloalkyl groups include a cyclopentyl group, cyclohexyl group, 2,5-dimethylcyclopentyl group, and 4-tert-butylcyclohexyl group. In addition, the number of carbon atoms in the cycloalkyl group is preferably in a range of 3 to 12. The number of carbon atoms is more preferably in a range of 3 to 6. The substituents for the substituted cycloalkyl group may be the same as the substituents exemplified as the substituents for the alkyl group.

The alkenyl groups in General Formula (2), General Formula (3), and General Formula (4) are each independently selected. The alkenyl group may have a substituent or may be unsubstituted. Examples of alkenyl groups include

linear or branched alkenyl groups. The alkenyl group generally refers to a group having one double bond in its structure, but in this specification, the alkenyl group may have a plurality of double bonds in its structure. Specific examples of alkenyl groups include a vinyl group, 1-propenyl group, allyl group, 2-butenyl group, 3-butenyl group, isopropenyl group, isobutenyl group, 1-pentenyl group, 2-pentenyl group, 3-pentenyl group, 4-pentenyl group, 1-hexenyl group, 2-hexenyl group, 3-hexenyl group, 4-hexenyl group, and 1,3-butadienyl group. The number of carbon atoms in the alkenyl group is preferably in a range of 2 to 18. The number of carbon atoms is more preferably 2 to 10, and still more preferably 2 to 5. The substituents for the substituted alkenyl group may be the same as the substituents exemplified as the substituents for the alkyl group.

The heterocyclic groups in General Formula (2), General Formula (3), and General Formula (4) are each independently selected. The heterocyclic group may have a substituent or may be unsubstituted.

Examples of heterocyclic groups include an aliphatic heterocyclic group and an aromatic heterocyclic group. Specific examples include a pyridyl group, pyrazyl group, piperidino group, pyranyl group, morpholino group, and acridinyl group. In addition, groups represented by the following structural formula may be exemplified. The number of carbon atoms in the heterocyclic group (the number of carbon atoms constituting a ring) is preferably 4 to 12. The number of ring members is preferably 5 to 13.

[Chem. 4]

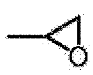
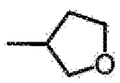
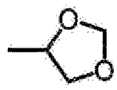
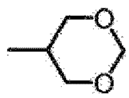
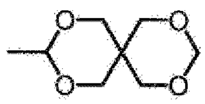
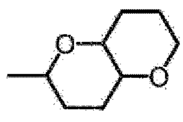
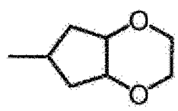

The substituents for the substituted heterocyclic group may be the same as the substituents exemplified as the substituents for the alkyl group. Examples of substituted heterocyclic groups include a heterocyclic group, 3-methylpyridyl group, N-methylpiperidyl group, and N-methylpyrrolyl group.

The alkoxy groups in General Formula (2), General Formula (3), and General Formula (4) are each independently selected. The alkoxy group may have a substituent or may be unsubstituted.

Examples of alkoxy groups include linear or branched alkoxyl groups. Specific examples include a methoxy group, ethoxy group, propoxy group, isopropoxy group, n-butoxy group, isobutoxy group, tert-butoxy group, neopentyloxy group, 2,3-dimethyl-3-pentyloxy group, n-hexyloxy group, n-octyloxy group, stearyloxy group, and 2-ethylhexyloxy group. The number of carbon atoms in the alkoxyl group is preferably in a range of 1 to 6.

The substituents for the substituted alkoxyl group may be the same as the substituents exemplified as the substituents for the alkyl group.

The substituents for the substituted alkoxy group may be the same as the substituents exemplified as the substituents for the alkyl group. Specific examples of substituted alkoxy groups include a trichloromethoxy group, trifluoromethoxy group, 2,2,2-trifluoroethoxy group, 2,2,3,3-tetrafluoropropoxy group, 2,2-bis(trifluoromethyl)propoxy group, 2-ethoxyethoxy group, 2-butoxyethoxy group, 2-nitropropoxy group, and benzyloxy group.

The aryloxy groups in General Formula (2), General Formula (3), and General Formula (4) are each independently selected. The aryloxy group may have a substituent or may be unsubstituted.

Examples of aryloxy groups include monocyclic or fused polycyclic aryloxy groups. Specific examples include a phenoxy group, p-methylphenoxy group, naphthyloxy group, and anthryloxy group. The aryloxy group is preferably a monocyclic aryloxy group. In addition, an aryloxy group having 6 to 12 carbon atoms is preferable.

The substituents for the substituted aryloxy group may be the same as the substituents exemplified as the substituents for the aryl group. Examples of substituted aryloxy groups include a p-nitrophenoxy group, p-methoxyphenoxy group, 2,4-dichlorophenoxy group, pentafluorophenoxy group, and 2-methyl-4-chlorophenoxy group.

The alkylene groups in General Formula (2), General Formula (3), and General Formula (4) are each independently selected. The alkylene group may have a substituent or may be unsubstituted. Examples of alkylene groups include divalent groups obtained by removing one hydrogen atom from the alkyl group. Specific examples of substituted or unsubstituted alkylene groups include $-CH_2-CH_2-$, $-CH_2-CH_2-CH_2-NHCO-CH_2-CH_2-$, $-CH_2-CH_2-CH_2-OCO-CH_2-CH_2-$, and $-CH_2-CH_2-CH_2-O-CH_2-CH_2-$.

The arylene groups in General Formula (2), General Formula (3), and General Formula (4) are each independently selected. The arylene group may have a substituent or may be unsubstituted. Examples of arylene groups include

divalent groups obtained by removing one hydrogen atom from the aryl group. The number of carbon atoms in the arylene group is preferably in a range of 6 to 10. In one embodiment, the arylene group may be a phenylene group or a naphthylene group. Specific examples of substituted or unsubstituted arylene groups include groups represented by the following structural formula.

[Chem. 5]

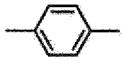
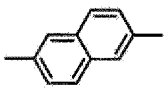
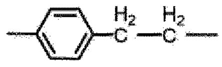
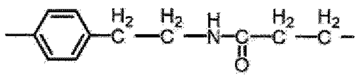
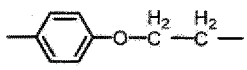
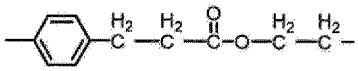

The alkynyl groups in General Formula (2), General Formula (3), and General Formula (4) are each independently selected. The alkynyl group may have a substituent or may be unsubstituted. Examples of alkynyl groups include linear or branched alkynyl groups. The alkynyl group generally refers to a group having one triple bond in its structure, but in this specification, the alkynyl group may have a plurality of triple bonds in its structure. Specific examples of alkenyl groups include an ethynyl group, propynyl group, propargyl group, and alcohol propargyl group. The number of carbon atoms in the alkynyl group is preferably 2 to 5.

The alkylthio groups in General Formula (2), General Formula (3), and General Formula (4) are each independently selected. The alkylthio group may have a substituent or may be unsubstituted. Examples of alkylthio groups include alkylthio groups such as a methylthio group, ethylthio group, propylthio group, butylthio group, octylthio group, and 2-ethylhexylthio group. In addition, the number of carbon atoms in the alkylthio group is preferably in a range of 1 to 5.

The substituents for the substituted alkylthio group may be the same as the substituents exemplified as the substituents for the alkyl group.

The arylthio groups in General Formula (2), General Formula (3), and General Formula (4) are each independently selected. The arylthio group may have a substituent or may be unsubstituted. Examples of arylthio groups include arylthio groups such as a phenylthio group, naphthylthio group, anthrylthio group, phenanthrylthio group, and pyrenylthio group. In addition, the number of carbon atoms in the arylthio group is preferably in a range of 1 to 5. The substituents for the substituted arylthio group may be the same as the substituents exemplified as the substituents for the alkyl group.

In one embodiment, the colorant for fluorescent labeling is preferably a compound having a phthalocyanine framework having a structure represented by General Formula (2). Among these, the aromatic ring in the phthalocyanine framework preferably has an alkoxy group or alkylthio group represented by -OR or -SR, and each of these groups may have a substituent. In General Formula (2), the axial ligand represented by $X^{17}$ is preferably any group to which a substituted or unsubstituted alkyl group, a substituted or unsubstituted aryl group, or a substituted or unsubstituted heterocyclic group is bonded via -O-, -OP(=O)-, -OC(=O)-, $-OS(=O)_2-$, or -OSi-.

In other embodiments, the colorant for fluorescent labeling is preferably a compound having a boron dipyrromethene framework having a structure represented by General Formula (3) or (4), and more preferably a compound represented by General Formula (3). In the compound having the boron dipyrromethene framework, it is preferable that $X^{18}$ and $X^{19}$, and/or $X^{23}$ and $X^{24}$ in the formula be condensed to form a 5-membered heterocycle or 6-membered benzene ring. The formed ring preferably has a group to which a substituted or unsubstituted alkyl group, a substituted or unsubstituted aryl group, or a substituted or unsubstituted heterocyclic group is bonded via -O-, - OP(=O)-, -OC(=O)-, $-OS(=O)_2-$, or -OSi-.

<Fluorescent labeling agent>

One embodiment of the present invention relates to a fluorescent labeling agent containing the colorant for fluorescent labeling. This fluorescent labeling agent can be applied for fluorescent labeling in bioimaging in a wide range of fields from biochemical research to medical diagnosis. For example, the fluorescent labeling agent can be used for fluorescent labeling in the fields of genetic diagnosis, in the fields of immunodiagnosis, in the fields of medical development, in the fields of regenerative medicine, in the fields of environmental testing, in the fields of biotechnology, and in the fields of fluorescent penetrant inspection. The biological substance to be fluorescently labeled is not particularly limited, and examples thereof include cells, cell organelles (organelles), extracellular vesicles such as exosomes, and

solid lipid nanoparticles such as liposomes.

In the fluorescent labeling agent of the above embodiment, the concentration of the colorant for fluorescent labeling is not particularly limited. For example, when cells are handled, it is preferable that the concentration of the colorant for fluorescent labeling be low in consideration of the effects on cell dysfunction, growth inhibition and the like. In one embodiment, for example, the concentration of the colorant for fluorescent labeling with respect to cells seeded in a 96-well plate (10,000 cells/well) is preferably 100 μM or less. The concentration is more preferably 50 μM or less and still more preferably 10 μM or less. According to the colorant for fluorescent labeling of the above embodiment, due to its excellent cell membrane permeability, imaging can be performed with a high fluorescence intensity even at a low concentration. Therefore, for example, even at a low concentration of 2 μM or less, more accurate detection can be performed.

The fluorescent labeling agent of the above embodiment may contain the colorant for fluorescent labeling of the above embodiment, and may contain, as necessary, other components. Other components may be components well known in the art. Examples thereof include a solvent and an amphiphilic agent.

The solvent may be water or an organic solvent, and water is more preferable. In consideration of the solubility of the colorant for fluorescent labeling, a mixture of water and an organic solvent may be used. For example, the organic solvent is preferably ethanol or dimethyl sulfoxide (DMSO).

The amphiphilic agent is a general term for compounds having a hydrophilic group and a hydrophobic group in one molecule. Specific examples include surfactants and phospholipids. Amphiphilic agents may be used alone or a combination of two or more thereof may be used. In the colorant for fluorescent labeling of the above embodiment, the amphiphilic agent is not particularly limited, and may be any compound as long as it can solubilize a water-insoluble fluorescent colorant that emits fluorescence in the near infrared range in water. Although not particularly limited, specific examples of amphiphilic agents that can be used are listed below.

Examples of surfactants include nonionic surfactants, cationic surfactants, anionic surfactants, and polymeric surfactants.

Examples of nonionic surfactants include polyoxyethylene sorbitan-based fatty acid esters such as Tween (registered trademark) 20, Tween (registered trademark) 40, Tween (registered trademark) 60, and Tween (registered trademark) 80, polyoxyethylene castor oil derivatives such as Cremophor (registered trademark) EL and Cremophor (registered trademark) RH60, 12-hydroxystearic acid-polyethylene glycol copolymers such as Solutol (registered trademark) HS 15, and octylphenol ethoxylates such as Triton (registered trademark) X-100 and Triton (registered trademark) X-114.

Examples of cationic surfactants include alkyltrimethylammonium salts such as stearyl trimethyl ammonium chloride, and lauryl trimethyl ammonium chloride, alkylpyridinium salts such as cetylpyridinium chloride, alkyl quaternary ammonium salts such as distearyldimethylammonium chloride, dialkyldimethylammonium salts, and poly(N,N'-dimethyl-3,5-methylenepiperidinium)chloride, alkyl dimethyl benzyl ammonium salts, alkylisoquinolinium salts, dialkylmorphonium salts, polyoxyethylenealkylamines, alkylamine salts, polyamine fatty acid derivatives, amyl alcohol fatty acid derivatives, benzalkonium chloride, and benzethonium chloride.

Examples of anionic surfactants include sodium dodecyl sulfate, dodecylbenzene sulfonate, decylbenzene sulfonate, undecylbenzene sulfonate, tridecylbenzene sulfonate, and nonylbenzene sulfonate, and their sodium, and potassium and ammonium salts.

Examples of polymeric surfactants include block copolymers such as polyvinyl alcohol, polyoxyethylene polyoxypropylene glycol, polyethylene glycol-polyalkyl, polyethylene glycol-polylactic acid, polyethylene glycol-polycaprolactone, polyethylene glycol-polyglycolic acid, and polyethylene glycol-poly(lactide-glycolide).

In one embodiment, the fluorescent labeling agent of the above embodiment may contain one, two or more of the compounds exemplified above as an amphiphilic agent. However, in the fluorescent labeling agent of the above embodiment, since the colorant for fluorescent labeling has excellent cell membrane permeability, detection with high sensitivity is possible without requiring an amphiphilic agent.

In one embodiment, as the fluorescent labeling agent, various colorants classified into phthalocyanines represented by General Formula (2) and boron dipyrromethenes represented by General Formula (3) or (4) can be suitably used. When a raw material phthalonitrile derivative has an asymmetrical structure, phthalocyanine is obtained as a mixture of isomers with different substituent positions. Hereinafter, in this specification, only one example of the phthalocyanine structure will be shown, but this does not exclude isomers with different substituent positions.

Specific examples of the colorant for fluorescent labeling according to one embodiment of the present invention include the following. However, the colorant for fluorescent labeling according to the present invention is not limited thereto.

[Table 1-1]

| Colorant for fluorescent labeling 1 | Colorant for fluorescent labeling 2 |
|---|---|

(continued)

| | |
|---|---|
| 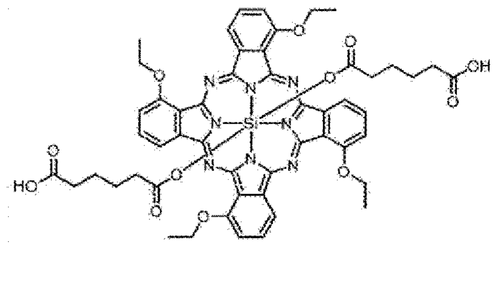 | 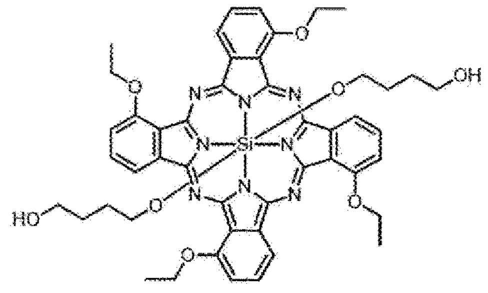 |
| Colorant for fluorescent labeling 3<br>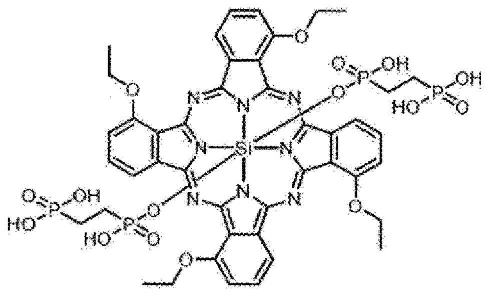 | Colorant for fluorescent labeling 4<br>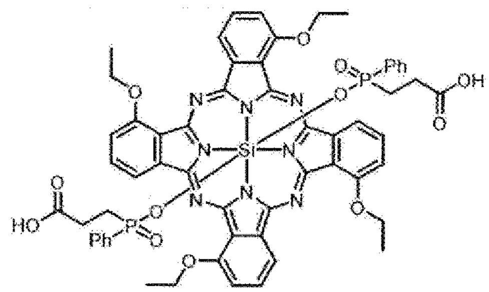 |
| Colorant for fluorescent labeling 5<br>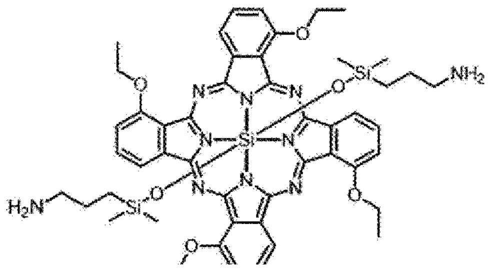 | Colorant for fluorescent labeling 6<br>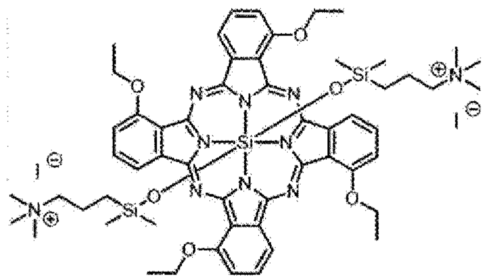 |

[Table 1-2]

| | |
|---|---|
| Colorant for fluorescent labeling 7<br>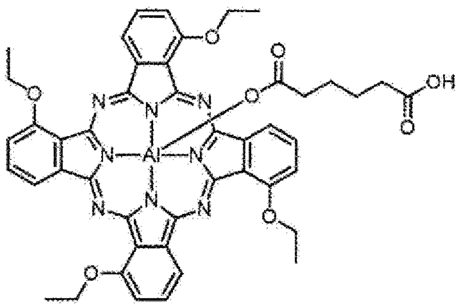 | Colorant for fluorescent labeling 8<br>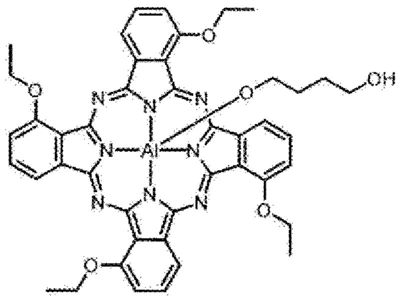 |
| Colorant for fluorescent labeling 9 | Colorant for fluorescent labeling 10 |

(continued)

| | |
|---|---|
| 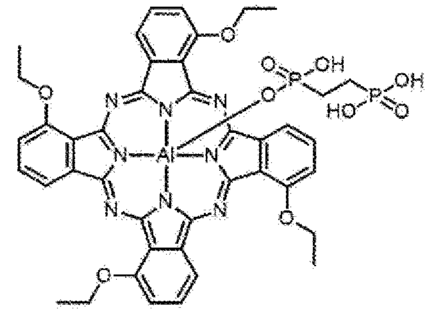 | 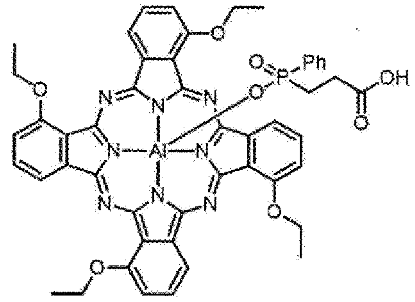 |
| Colorant for fluorescent labeling 11<br>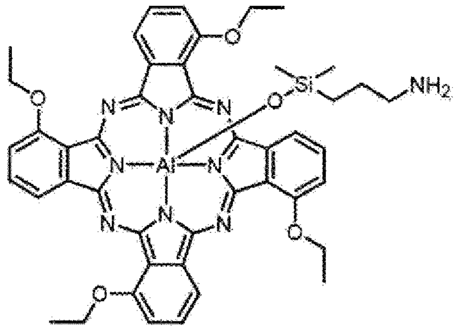 | Colorant for fluorescent labeling 12<br>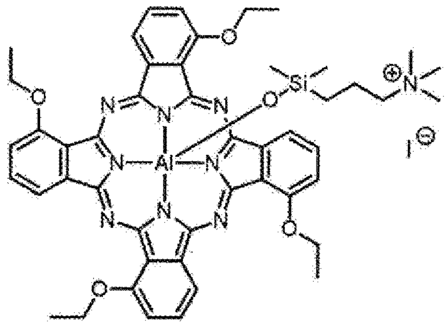 |

[Table 1-3]

| | |
|---|---|
| Colorant for fluorescent labeling 13<br>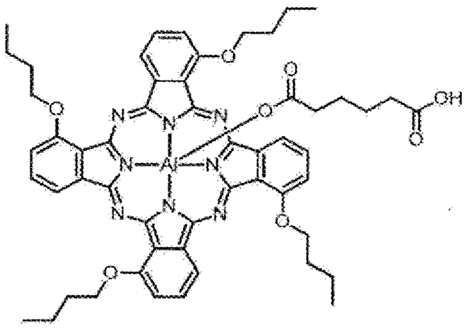 | Colorant for fluorescent labeling 14<br>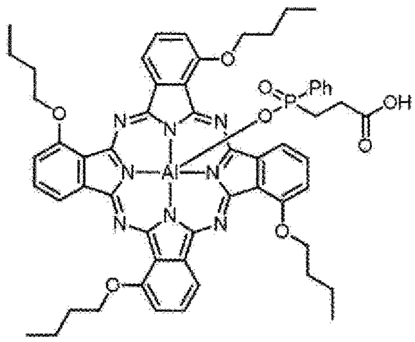 |
| Colorant for fluorescent labeling 15<br>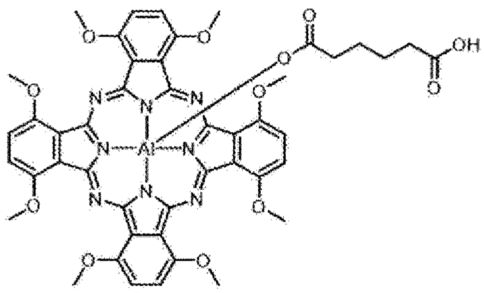 | Colorant for fluorescent labeling 16<br>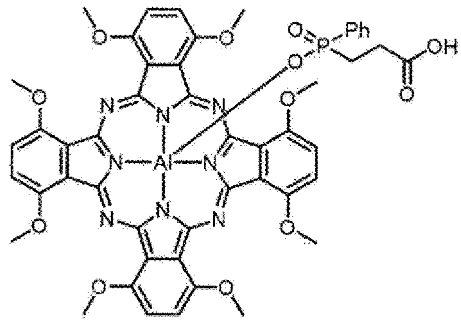 |
| Colorant for fluorescent labeling 17 | Colorant for fluorescent labeling 18 |

(continued)

| | |
|---|---|
| 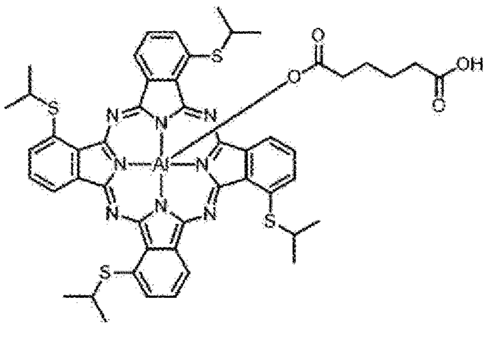 | 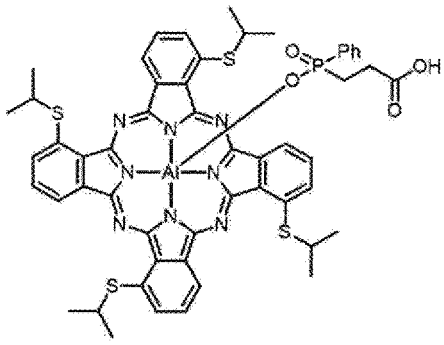 |

[Table 1-4]

| Colorant for fluorescent labeling 19 | Colorant for fluorescent labeling 20 |
|---|---|
| 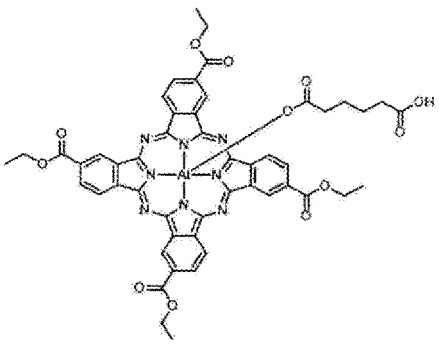 | 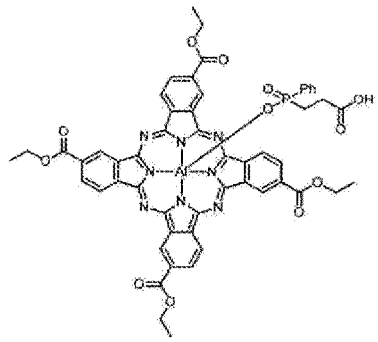 |
| Colorant for fluorescent labeling 21<br>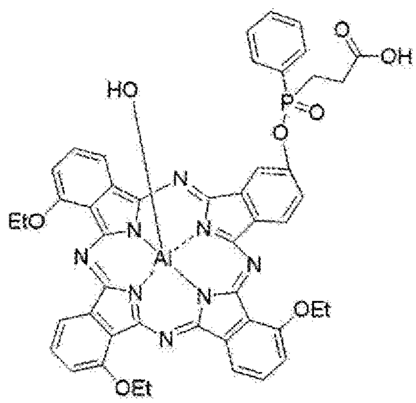 | Colorant for fluorescent labeling 22<br>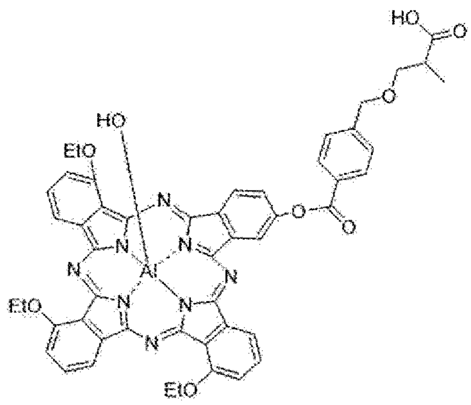 |
| Colorant for fluorescent labeling 23<br>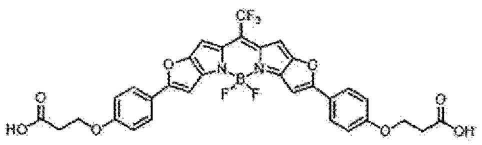 | Colorant for fluorescent labeling 24<br>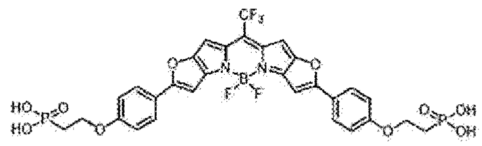 |

Examples

Hereinafter, the present invention will be described with reference to examples, but the present invention is not limited to the following description. Here, "parts" described in the examples refers to "parts by mass."

(Mass spectrometry)

Analysis was performed using a mass spectrometer (TOF-MS: commercially available from Bruker Daltonics autoflexll).

<I> Colorant for fluorescent labeling

[Production Example 1]

<Method of producing compound A-1>

Ammonia gas was introduced into a solution containing 50 parts of quinoline and 1 part of silicon tetrachloride, 3 parts of 3-ethoxyphthalonitrile was additionally added, and the mixture was reacted at 180°C for 7 hours. The reaction solution was cooled to room temperature, and 200 parts of methanol and 200 parts of a 10% aqueous hydrochloric acid solution were then added. Next, the precipitated solid was collected by filtration and the solid was washed with 200 parts of water. The washed solid was dried at 80°C to obtain a compound A-1 shown in Table 2 (yield 80.2%). As a result of mass spectrometry, a molecule ion peak was detected at m/z=787.54 (theoretical value $[M+H]^+$=787.17), and it was confirmed that the compound A-1 had a structure shown in Table 2.

[Production Examples 2 to 6]

<Method of producing compounds A-2 to A-6 >

Compounds A-2 to A-6 shown in Table 2 were produced in the same manner as in the production of the compound A-1 except that, instead of 3-ethoxyphthalonitrile and silicon tetrachloride used in the method of producing the compound A-1, phthalonitrile derivatives and a metal source shown in Table 2 were used. Here, the phthalonitrile derivatives and metal source were used in the same molar amounts as 3-ethoxyphthalonitrile and silicon tetrachloride in the production of the compound A-1. The structures of the obtained compounds A-2 to A-6 were identified by mass spectrometry, and it was confirmed that they had the structures shown in Table 2. Table 2 shows the mass spectrum analysis results.

[Table 2-1]

| | Phthalonitrile derivatives | Metal salt | Compound A | MALDI-TOF-MS $[M+H]^+$ |
|---|---|---|---|---|
| Production Example 1 | 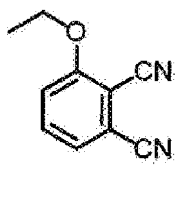 | $SiCl_4$ | A-1 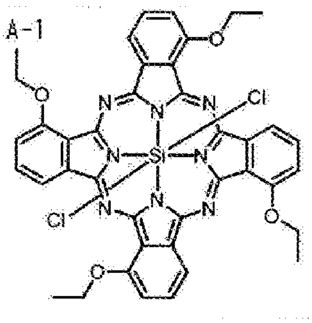 | Theoretical value : 787.17<br>Actually measured value :787.54 |
| Production Example 2 | 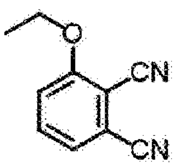 | $AlCl_3$ | A-2 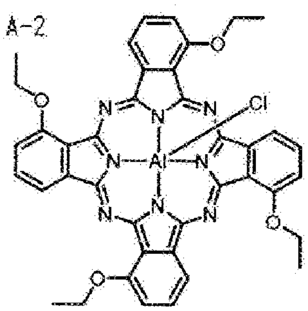 | Theoretical value : 766.23<br>Actually measured value :766.05 |

(continued)

| | Phthalonitrile derivatives | Metal salt | Compound A | MALDI-TOF-MS [M+H]$^+$ |
|---|---|---|---|---|
| Production Example 3 | 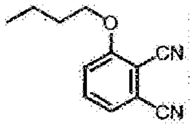 | $AlCl_3$ | A-3 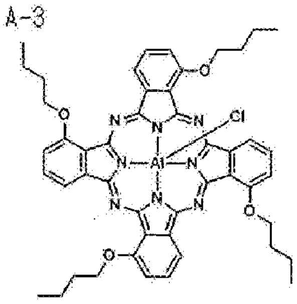 | Theoretical value : 863.33<br>Actually measured value :863.05 |
| Production Example 4 | 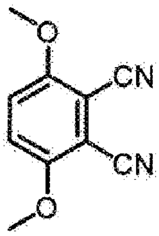 | $AlCl_3$ | A-4 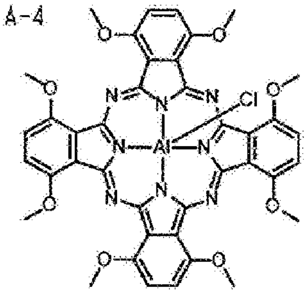 | Theoretical value : 815.18<br>Actually measured value : 815.5 4 |

[Table 2-2]

| | Phthalonitrile derivatives | Metal salt | Compound A | MALDI-TOF-MS [M+H]$^+$ |
|---|---|---|---|---|
| Production Example 5 | 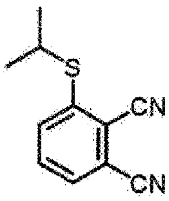 | $AlCl_3$ | A-5 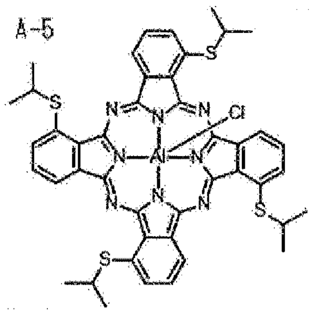 | Theoretical value : 871.18<br>Actually measured value :871 .34 |
| Production Example 6 | 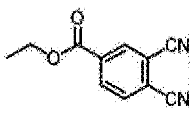 | $AlCl_3$ | A-6 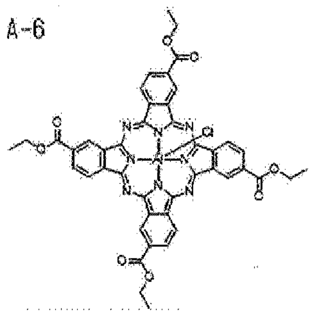 | Theoretical value : 863.18<br>Actually measured value :863.22 |

[Production Example 7]

<Method of producing compound B-1>

Ammonia gas was introduced into a solution containing 50 parts of quinoline and 1 part of anhydrous aluminium

chloride, and 3.8 parts of 3-ethoxyphthalonitrile and 1.1 parts of 4-fluorophthalonitrile were additionally added. The mixture was reacted at 180°C for 7 hours. The reaction solution was cooled to room temperature, and 200 parts of methanol and 200 parts of a 10% aqueous hydrochloric acid solution were then added. Next, the precipitated solid was collected by filtration and the solid was washed with 200 parts of water. The washed solid (crude product) was purified using a preparative medium-pressure liquid chromatograph (Smart Flash AKROS commercially available from Yamazen Corporation). The obtained purified product was dried at 80°C to obtain a compound B-1 shown in Table 3 (yield 30.5%). As a result of mass spectrometry, a molecule ion peak was detected at m/z=707.30 (theoretical value $[M+H]^+$=707.20), and it was confirmed that the compound B-1 had a structure shown in Table 3.

[Table 3]

| | Compound 8 |
|---|---|
| Production Example 7 | B-1 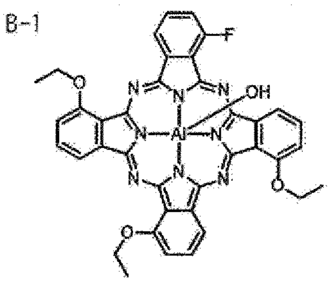 |

[Example 1]

<Method of producing colorant for fluorescent labeling 1>

1 part of the compound A-1 and 0.6 parts of adipic acid were dissolved in pyridine, and this solution was refluxed at 115°C for 3 hours to obtain a reaction solution. Pyridine was removed from the reaction solution using an evaporator, and a mixed solution of 10 parts of ethanol and 50 parts of water was then added. Next, the precipitated solid was collected by filtration, and the solid was washed with 50 parts of water. The washed solid was dried at 80°C to obtain a colorant for fluorescent labeling 1 shown in Table 1 (yield 33.7%). As a result of mass spectrometry, a molecule ion peak was detected at m/z=1007.54 (theoretical value $[M+H]^+$=1007.33), and it was confirmed that the colorant for fluorescent labeling 1 had a structure shown in Table 1.

[Examples 2 to 18]

<Method of producing colorants for fluorescent labeling 1 to 5, 7 to 11, 13 to 20>

Colorants for fluorescent labeling 1 to 5, 7 to 11, 13 to 20 shown in Table 1 were produced in the same manner as in the production of the colorant for fluorescent labeling 1 except that, instead of the compound A-1 and adipic acid used in the method of producing the colorant for fluorescent labeling 1, the compound A and an axial ligand shown in Table 4 were used. Here, the compound B was used in the same molar amount as the compound B-1 used in the production of the colorant for fluorescent labeling 1. The structures of the obtained colorants for fluorescent labeling 2 to 5 were identified by mass spectrometry, and it was confirmed that they had structures shown in Table 1. Table 4 shows the mass spectrum analysis results.

[Table 4-1]

| | Axial ligand | Compound A | Colorant for fluorescent labeling | MALDI-TOF-MS $[M+H]^+$ |
|---|---|---|---|---|
| Example 1 | 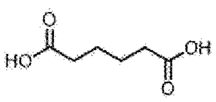 | A-1 | Colorant for fluorescent labeling 1 | Theoretical value :1007.33<br>Actually measured value : 1007.55 |

(continued)

| | Axial ligand | Compound A | Colorant for fluorescent labeling | MALDI-TOF-MS $[M+H]^+$ |
|---|---|---|---|---|
| Example 2 | 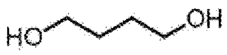 | A-1 | Colorant for fluorescent labeling 2 | Theoretical value : 895.35 Actually measured value : 895.14 |
| Example 3 | 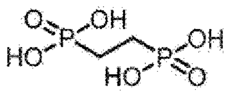 | A-1 | Colorant for fluorescent labeling 3 | Theoretical value :1095.18 Actually measured value : 1095.08 |
| Example 4 | 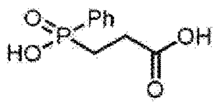 | A-1 | Colorant for fluorescent labeling 4 | Theoretical value :1143.29 Actually measured value : 1143.47 |
| Example 5 | 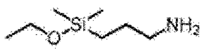 | A-1 | Colorant for fluorescent labeling 5 | Theoretical value :981.40 Actually measured value : 981.77 |

[Table 4-2]

| | Axial ligand | Compound A | Colorant for fluorescent labeling | MALDI-TOF-MS $[M+H]^+$ |
|---|---|---|---|---|
| Example 6 | 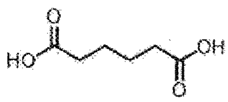 | A-2 | Colorant for fluorescent labeling 7 | Theoretical value : 861.29 Actually measured value ; 861.83 |
| Example 7 | 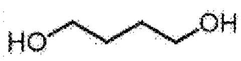 | A-2 | Colorant for fluorescent labeling 8 | Theoretical value : 828.32 Actually measured value :819.98 |
| Example 8 | 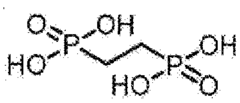 | A-2 | Colorant for fluorescent labeling 9 | Theoretical value : 905.21 Actually measured value :905.33 |
| Example 9 | 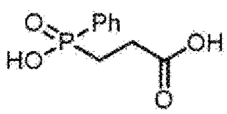 A-2 | A-2 | Colorant for fluorescent labeling 10 | Theoretical value : 929.27 Actually measured value :929.20 |
| Example 10 | 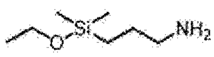 | A-2 | Colorant for fluorescent labeling 11 | Theoretical value : 848.32 Actually measured value :848.01 |

[Table 4-3]

| | Axial ligand | Compound A | Colorant for fluorescent labeling | MALDI-TOF-MS [M+H]$^+$ |
|---|---|---|---|---|
| Example 11 | 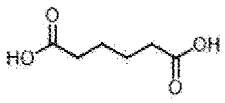 | A-3 | Colorant for fluorescent labeling 13 | Theoretical value :973.41 Actually measured value :973.20 |
| Example 12 | 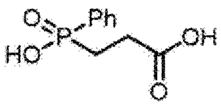 | A-3 | Colorant for fluorescent labeling 14 | Theoretical value :1041.39 Actually measured value :1041.55 |
| Example 13 | 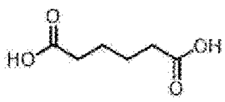 | A-4 | Colorant for fluorescent labeling 15 | Theoretical value :925.27 Actually measured value :925.10 |
| Example 14 | 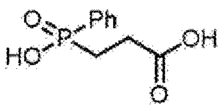 | A-4 | Colorant for fluorescent labeling 16 | Theoretical value :993.25 Actually measured value :993.62 |

[Table 4-4]

| | Axial ligand | Compound A | Colorant for fluorescent labeling | MALDI-TOF-MS [M+H]$^+$ |
|---|---|---|---|---|
| Example 15 | 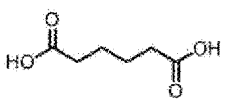 | A-5 | Colorant for fluorescent labeling 17 | Theoretical value :981.26 Actually measured value :981.62 |
| Example 16 | 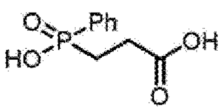 | A-5 | Colorant for fluorescent labeling 18 | Theoretical value :1049.24 Actually measured value :1049.22 |
| Example 17 | 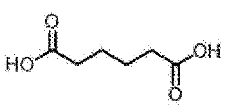 | A-6 | Colorant for fluorescent labeling 19 | Theoretical value :973.27 Actually measured value :973.05 |
| Example 18 | 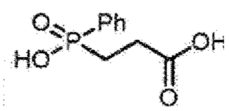 | A-6 | Colorant for fluorescent labeling 20 | Theoretical value :1041.25 Actually measured value :1040.93 |

[Example 19]

<Method of producing colorant for fluorescent labeling 6>

1 part of the colorant for fluorescent labeling 5, 0.8 parts of methyl iodide, and 0.8 parts of potassium carbonate were dissolved in 50 parts of tetrahydrofuran, and this solution was reacted at 25°C for 5 hours. Tetrahydrofuran was removed from the reaction solution using an evaporator, and 20 parts of tetrahydrofuran and 60 parts of water were then added. Next, the precipitated solid was collected by filtration, and the solid was washed with 60 parts of water. The washed solid was dried at 80°C to obtain 0.21 parts of a colorant for fluorescent labeling 6 shown in Table 1 (yield 33.3%). As a result of mass spectrometry, a molecule ion peak was detected at m/z=1,193.55 (theoretical value $[M-1]^+$=1,193.42), and it was confirmed that the colorant for fluorescent labeling 6 had a structure shown in Table 1.

[Example 20]

<Method of producing colorant for fluorescent labeling 12>

A colorant for fluorescent labeling 12 shown in Table 1 was produced in the same manner as in the production of the colorant for fluorescent labeling 6 except that, instead of the colorant for fluorescent labeling 5 used in the method of producing the colorant for fluorescent labeling 6, the colorant for fluorescent labeling 11 was used. The colorant for fluorescent labeling 11 was used in the same molar amount as the colorant for fluorescent labeling 5 used in the production of the colorant for fluorescent labeling 6. As a result of mass spectrometry, a molecule ion peak was detected at m/z=890.11(theoretical value $[M-I]^+$=890.38), and it was confirmed that the colorant for fluorescent labeling 12 had a structure shown in Table 1.

[Example 21]

<Method of producing colorant for fluorescent labeling 21>

1.0 part of the compound B-1 and 0.6 parts of (2-carboxyethyl)phenylphosphinic acid were dissolved in 50 parts of dimethyl sulfoxide, 0.4 parts of 1,8-diazabicyclo[5.4.0]-7-undecene was additionally added, and this solution was then reacted at 90°C for 8 hours. The reaction solution was cooled to room temperature and 100 parts of water was then added. Next, the precipitated solid was collected by filtration, and the solid was washed with 50 parts of water. The obtained solid (crude product) was purified using a preparative medium-pressure liquid chromatograph (Smart Flash AKROS commercially available from Yamazen Corporation). The obtained purified product was dried at 80°C to obtain a colorant for fluorescent labeling 21 shown in Table 1 (yield 60.1%). As a result of mass spectrometry, a molecule ion peak was detected at m/z=901.46 (theoretical value $[M+H]^+$=901.24), and it was confirmed that the colorant for fluorescent labeling 21 had a structure shown in Table 1.

[Example 22]

<Method of producing colorant for fluorescent labeling 22>

A colorant for fluorescent labeling 22 shown in Table 1 was produced in the same manner as in the production of the colorant for fluorescent labeling 21 except that, instead of (2-carboxyethyl)phenylphosphinic acid used in the method of producing the colorant for fluorescent labeling 21, 1,4-phenylenediacetic acid was used. 1,4-phenylenediacetic acid was used in the same molar amount as (2-carboxyethyl)phenylphosphinic acid used in the production of the colorant for fluorescent labeling 21. The structure of the obtained colorant for fluorescent labeling 22 was identified by mass spectrometry, and it was confirmed that the colorant had a structure shown in Table 1. As a result of mass spectrometry, a molecule ion peak was detected at m/z=881.44(theoretical value $[M+H]^+$=881.25), and it was confirmed that the colorant for fluorescent labeling 22 had a structure shown in Table 1.

[Production Example 8]

<Method of producing compound C-1>

1.0 part of pyrrole-2-carboxylic acid derivatives in Table 5 were used as a starting raw material, and 85.1 parts of trifluoroacetic acid was added as an organic acid, and dissolved in 50°C. In addition, 31.4 parts of an acid anhydride of the organic acid used was added, and this solution was then reacted at 90°C for 6 hours. The reaction solution was

cooled to room temperature, and ice, and 174.2 parts of sodium hydrogen carbonate were then added. Next, 44.0 parts of ammonium chloride was added, the precipitated solid was collected by filtration, sufficiently dried under a reduced pressure, and then put into a new reaction container. 2.5 parts of triethylamine and 42.3 parts of N-methyl-2-pyrrolidone were added thereto and dissolved, 5.2 parts of a trifluoroboron diethyl ether complex was then added, and this solution was reacted at 80°C for 4 hours. 5.2 parts of ammonium chloride was added, and the organic phase obtained by a liquid-separating operation using ethyl acetate was dried to obtain a crude product. The crude product was purified using a preparative medium-pressure liquid chromatograph (Smart Flash AKROS commercially available from Yamazen Corporation) to obtain a compound C-1 shown in Table 5 (yield 15.0%). As a result of mass spectrometry, a molecule ion peak was detected at m/z=525.02(theoretical value $[M+H]^+$=525.10), and it was confirmed that the compound C-1 had a structure shown in Table 5.

[Table 5]

| | Pyrrole-2-carboxylic acid | Compound C-1 |
|---|---|---|
| Production Example 8 | 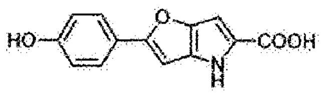 | 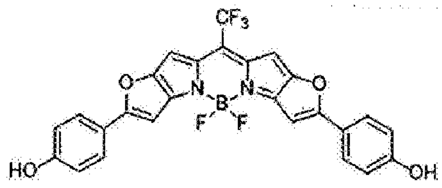 |

[Example 23]

<Method of producing colorant for fluorescent labeling 23 >

1.0 part of the compound C-1 was used as a starting raw material, and dissolved in 70.3 parts of tetrahydrofuran, and the solution was cooled to 0°C. In addition, 0.54 parts of 3-bromopropionic acid was added, 0.14 parts of sodium hydride was slowly added, and this solution was then reacted under refluxing and stirring for 4 hours. The reaction solution was cooled to room temperature and then neutralized in an ammonium chloride aqueous solution. Next, 100 parts of water was added, the precipitated solid was collected by filtration, and sufficiently dried under a reduced pressure to obtain 0.61 parts of a colorant for fluorescent labeling 23 shown in Table 3 (yield 50.0%). As a result of mass spectrometry, a molecule ion peak was detected at m/z=669.42(theoretical value $[M+H]^+$=669.14), and it was confirmed that the colorant for fluorescent labeling 23 had a structure shown in Table 1.

[Example 24]

<Method of producing colorant for fluorescent labeling 24>

A colorant for fluorescent labeling 24 shown in Table 1 was produced in the same manner as in the production of the colorant for fluorescent labeling 23 except that, instead of 3-bromopropionic acid used in the method of producing the colorant for fluorescent labeling 23, (2-bromoethyl)phosphonic acid was used. Here, (2-bromoethyl)phosphonic acid was used in the same molar amount as 3-bromopropionic acid used in the production of the colorant for fluorescent labeling 23. The structure of the obtained colorant for fluorescent labeling 24 was identified by mass spectrometry, and it was confirmed that the colorant had a structure shown in Table 1. As a result of mass spectrometry, a molecule ion peak was detected at m/z=741.24 (theoretical value $[M+H]^+$=741.09), and it was confirmed that the colorant for fluorescent labeling 24 had a structure shown in Table 1.

[Comparative Example 1]

<Method of producing Comparative Compound 1>

Ammonia gas was introduced into a solution containing 30 parts of quinoline and 0.2 parts of anhydrous aluminium chloride, 1.0 part of 3-(2,6-dimethyl-3-pentoxy)phthalonitrile was additionally added, and this solution was reacted at 180°C for 7 hours. The reaction solution was cooled to room temperature and 200 parts of methanol and 200 parts of a 10% aqueous hydrochloric acid solution were then added. Next, the precipitated solid was collected by filtration and the solid was washed with 200 parts of water. The washed solid was dried at 80°C to obtain Comparative Compound

1 shown in Table 6 (yield 85.4%). As a result of mass spectrometry, a molecule ion peak was detected at m/z=1,031.45(theoretical value $[M+H]^+$=1,031.52), and it was confirmed that Comparative Compound 1 had a structure shown in Table 6.

[Comparative Example 2]

<Method of producing Comparative Compound 2>

1.0 part of Comparative Compound and 0.35 parts of triphenylsilanol were dissolved in 20 parts of dimethyl sulfoxide, and this solution was reacted at 80°C for 8 hours. The reaction solution was cooled to room temperature, and 50 parts of water and 10 parts of saline were then added. Next, the precipitated solid was collected by filtration and the solid was washed with 50 parts of water. The washed solid was dried at 80°C to obtain 1.00 part of Comparative Compound 2 shown in Table 6 (yield 80.5%). As a result of mass spectrometry, a molecule ion peak was detected at m/z=1,271.53 (theoretical value $[M+H]^+$=1,271.64), and it was confirmed that the Comparative Compound 2 had a structure shown in Table 6.

[Comparative Example 3]

As Comparative Compound 3, "Aluminum 1, 8, 15, 22-tetrakis(phenylthio)-29H, 31H-phthalocyanine chloride" purchased from Sigma Aldrich was used.

[Comparative Example 4]

As Comparative Compound 4, the compound A-1 was used.

[Comparative Example 5]

As Comparative Compound 5, the compound A-2 was used.

[Comparative Example 6]

As Comparative Compound 6, a cyanine-based colorant XenoLight DiR (commercially available from Summit Pharmaceuticals International Corporation) was used.

[Table 6]

| | Comparative compound |
|---|---|
| Comparative Example 1 | Comparative compound 1 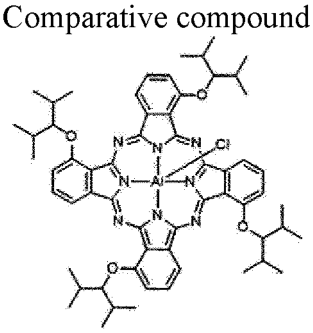 |

(continued)

| | Comparative compound |
|---|---|
| Comparative Example 2 | Comparative compound 2 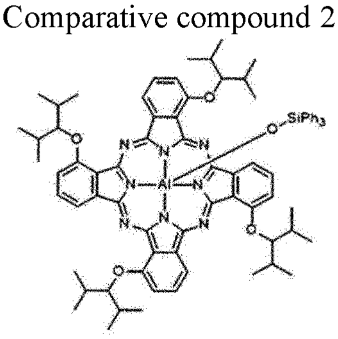 |
| Comparative Example 3 | Comparative compound 3 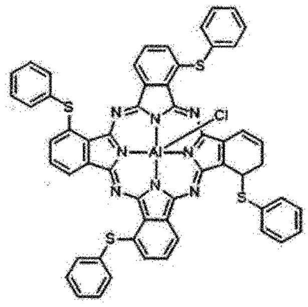 |
| Comparative Example 6 | Comparative compound 6 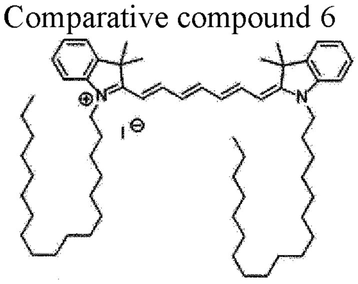 |

<II> Colorant solution

[Example 25]

<Preparation of colorant solution 1>

0.2014 mg of the colorant for fluorescent labeling 1 was dissolved in 10 ml of dimethyl sulfoxide. This solution was filtered using a Nylon membrane filter with a pore size of 0.2 μm to prepare a colorant solution 1 with a colorant concentration of 20 μM.

[Examples 26 to 48]

<Preparation of colorant solutions 2 to 24>

Colorant solutions 2 to 24 were prepared in the same manner as in the preparation of the colorant solution 1 except that, instead of the colorant for fluorescent labeling 1 used in the preparation of the colorant solution 1, a colorant for fluorescent labeling shown in Table 7 and a solvent were used. However, each colorant for fluorescent labeling was used in the same molar amount as the colorant for fluorescent labeling 1.

[Comparative Examples 7 to 12]

<Preparation of colorant solutions 25 to 30>

Colorant solutions 25 to 30 were prepared in the same manner as in the preparation of the colorant solution 1 except that, instead of the colorant for fluorescent labeling 1 used in the preparation of the colorant solution 1, the colorant for fluorescent labeling shown in Table 7 was used. However, each colorant for fluorescent labeling was used in the same molar amount as the colorant for fluorescent labeling 1.

[Table 7]

| | Colorant for fluorescent labeling | Colorant solution |
|---|---|---|
| Example 25 | Colorant for fluorescent labeling 1 | Colorant solution 1 |
| Example 26 | Colorant for fluorescent labeling 2 | Colorant solution 2 |
| Example 27 | Colorant for fluorescent labeling 3 | Colorant solution 3 |
| Example 28 | Colorant for fluorescent labeling 4 | Colorant solution 4 |
| Example 29 | Colorant for fluorescent labeling 5 | Colorant solution 5 |
| Example 30 | Colorant for fluorescent labeling 6 | Colorant solution 6 |
| Example 31 | Colorant for fluorescent labeling 7 | Colorant solution 7 |
| Example 32 | Colorant for fluorescent labeling 8 | Colorant solution 8 |
| Example 33 | Colorant for fluorescent labeling 9 | Colorant solution 9 |
| Example 34 | Colorant for fluorescent labeling 10 | Colorant solution 10 |
| Example 35 | Colorant for fluorescent labeling 11 | Colorant solution 11 |
| Example 36 | Colorant for fluorescent labeling 12 | Colorant solution 12 |
| Example 37 | Colorant for fluorescent labeling 13 | Colorant solution 13 |
| Example 38 | Colorant for fluorescent labeling 14 | Colorant solution 14 |
| Example 39 | Colorant for fluorescent labeling 15 | Colorant solution 15 |
| Example 40 | Colorant for fluorescent labeling 16 | Colorant solution 16 |
| Example 41 | Colorant for fluorescent labeling 17 | Colorant solution 17 |
| Example 42 | Colorant for fluorescent labeling 18 | Colorant solution 18 |
| Example 43 | Colorant for fluorescent labeling 19 | Colorant solution 19 |
| Example 44 | Colorant for fluorescent labeling 20 | Colorant solution 20 |
| Example 45 | Colorant for fluorescent labeling 21 | Colorant solution 21 |
| Example 46 | Colorant for fluorescent labeling 22 | Colorant solution 22 |
| Example 47 | Colorant for fluorescent labeling 23 | Colorant solution 23 |
| Example 48 | Colorant for fluorescent labeling 24 | Colorant solution 24 |
| | | |
| Comparative Example 7 | Comparative compound 1 | Colorant solution 25 |
| Comparative Example 8 | Comparative compound 2 | Colorant solution 26 |
| Comparative Example 9 | Comparative compound 3 | Colorant solution 27 |
| Comparative Example 10 | Comparative compound 4 | Colorant solution 28 |
| Comparative Example 11 | Comparative compound 5 | Colorant solution 29 |
| Comparative Example 12 | Comparative compound 6 | Colorant solution 30 |

<Measurement of average particle size of colorant fine particles of colorant for fluorescent labeling>

After each colorant solution was diluted 10-fold with phosphate buffered saline (PBS) to obtain a colorant dispersion I with a colorant concentration of 2 μM, measurement was performed immediately (within 5 minutes) using a particle size distribution measuring device (Zetasizer Nano ZSP, commercially available from Spectris). The Z average particle size of the colorant fine particles (the colorant dispersed component in the colorant dispersion I) of each colorant for fluorescent labeling was determined based on the following criteria. The determination results are shown in "average particle size" in Table 8.

(Determination criteria)

4: Z average particle size 5 nm or more to less than 100 nm
3: Z average particle size 100 nm or more to less than 300 nm
2: Z average particle size 300 nm or more to 500 nm or less
1: Z average particle size more than 500 nm

<Measurement of absorbance retention of colorant for fluorescent labeling>

After each colorant solution was diluted 10-fold with dimethyl sulfoxide to obtain a colorant solution I with a colorant concentration of 2 μM, the absorption spectrum was measured using a spectrophotometer (U-4100, commercially available from Hitachi High-Tech Corporation), and the absorbance $A_0$ at a maximum-absorption wavelength was obtained. In addition, after each colorant solution was diluted 10-fold with phosphate buffered saline (PBS) to obtain a colorant dispersion II with a colorant concentration of 2 μM, the absorption spectrum was measured immediately (within 5 minutes) using the spectrophotometer, and the absorbance $A_1$ at a maximum-absorption wavelength was obtained. Using the obtained values of $A_0$ and $A_1$, the absorbance retention was calculated from Formula (I), and determined based on the following criteria. The determination results are shown in "absorbance retention" in Table 8.

(Determination criteria)

| | | |
|---|---|---|
| 4: | absorbance retention | 0.8 or more |
| 3: | absorbance retention | less than 0.8 to 0.5 or more |
| 2: | absorbance retention | less than 0.5 to 0.3 or more |
| 1: | absorbance retention | less than 0.3 |

Fig. 1 shows an absorption spectrum when the colorant solution 7 containing 20 μM of a colorant for fluorescent labeling 7 was diluted 10-fold with dimethyl sulfoxide and PBS.

Fig. 2 shows an absorption spectrum when the colorant solution 26 containing 20 μM of Comparative Compound 2 was diluted 10-fold with dimethyl sulfoxide and PBS.

Fig. 3 shows an absorption spectrum when the colorant solution 30 containing 20 μM of Comparative Compound 6 was diluted 10-fold with dimethyl sulfoxide and PBS.

As can be understood from the comparison between Fig. 1 and Figs. 2 and 3, the colorants for fluorescent labeling of the present invention (examples) could maintain high absorbance even when diluted with PBS, but the absorbance significantly decreased in the comparative examples.

<III> Fluorescent labeling agent

[Example 127]

<Preparation of fluorescent labeling agent>

Each colorant solution was diluted 20-fold with an Eagle's minimum essential medium (commercially available from FUJIFILM Wako Pure Chemical Corporation) to prepare a fluorescent labeling agent containing 1 μM of the colorant for fluorescent labeling.

<Evaluation of cell staining of colorant for fluorescent labeling>

Hela cells were seeded in a 96-well plate ($1\times10^4$ cells/well), and cultured in an incubator (37°C, 5% $CO_2$-containing Air, humidified environment) for 48 hours using an Eagle's minimum essential medium (commercially available from FUJIFILM Wako Pure Chemical Corporation) containing 10% Fetal Bovine Serum (FBS) and 1% penicillin-streptomycin. Then, the medium was removed, and the fluorescent labeling agent prepared above was added to each well. The sample was left in an incubator for 1 hour, and then washed with the Eagle's minimum essential medium (commercially available from FUJIFILM Wako Pure Chemical Corporation). Using a plate reader (SPARK, commercially available from Tecan Group Ltd.), the fluorescence intensity was measured in a range of 780 to 800 nm, and evaluated based on the following criteria. The colorant for fluorescent labeling with an evaluation of 2 or more had a small average particle size of colorant fine particles (colorant dispersed component) when dispersed in PBS, had favorable cell membrane permeability due to endocytosis, and could be said to be suitable for cell staining. The evaluation results are shown in "fluorescence intensity during cell staining" in Table 8.

(Evaluation criteria)

4: fluorescence intensity measurement value 2,000 or more
3: fluorescence intensity measurement value less than 2,000 to 1,000 or more
2: fluorescence intensity measurement value less than 1,000 to 500 or more
1: fluorescence intensity measurement value less than 500

Figs. 4, 5, and 6 are images observed under a fluorescence microscope when cells were stained using a fluorescence microscope (BZ-X800, commercially available from Keyence Corporation, band pass filter: ex=715$\pm$37.5 nm, em=810$\pm$45 nm).

Fig. 4 shows an image observed under a fluorescence microscope when cells were stained using the colorant for fluorescent labeling 7 (magnification: 40x, fluorescence capture time: 1 second).

Fig. 5 shows an image observed under a fluorescence microscope when cells were stained using Comparative Compound 2 (magnification: 40x, fluorescence capture time: 1 second).

Fig. 6 shows an image observed under a fluorescence microscope when cells were stained using Comparative Compound 6 (magnification: 40x, fluorescence capture time: 1 second).

As can be understood from the comparison between Fig. 4 and Figs. 5 and 6, color development could be confirmed in the colorants for fluorescent labeling of the present invention (examples), but no color development could be confirmed in any of the comparative examples.

Based on the above results, it was confirmed that, in the colorants for fluorescent labeling of the present invention (compounds of the examples), the average particle size of the colorant dispersed component produced when dispersed in phosphate buffered saline (PBS) was small at 500 nm or less, and cell staining was strong. On the other hand, it was confirmed that, in Comparative Compounds 1 to 6, the average particle size of the colorant dispersed component produced when dispersed in PBS was large and cell staining was weak. The reason for this is that Comparative Compounds 1 to 6 tended to aggregate due to high hydrophobicity of the colorant, a colorant dispersed component with a large particle size was likely to be formed when PBS was added, and thus the delivery efficiency into the cytoplasm was greatly reduced. For example, it was thought that hydrophobicity was high when Comparative Compound 1 had a 2,4-dimethyl-3-pentanol group in the side chain and when Comparative Compound 6 had a long chain alkyl group bonded to the N atom. The compounds of the examples tended to have lower hydrophobicity of substituents than the compounds of the comparative examples, and therefore were considered to have a small particle size during dispersion and excellent cell permeability.

In addition, it was thought that, since the colorant for fluorescent labeling of the present invention had a high absorbance retention, the excitation light absorption rate did not decrease even when dispersed in an aqueous solvent, and a high fluorescence intensity was exhibited even during cell staining.

As shown above, it was found that, in the colorant for fluorescent labeling according to the present invention, when the average particle size of the colorant dispersed component formed as a colorant dispersion in which a colorant solution obtained by dissolving a colorant for fluorescent labeling in an organic solvent was added to PBS was 5 to 500 nm or less, and the absorbance retention calculated by Formula (I) was 0.5 or more, the cytoplasm dyeing efficiency was high, and the colorant could be suitably used as a cell staining colorant.

[Table 8]

| | Colorant for fluorescent labeling | Colorant solution | Average particle size | Absorbance retention | Fluorescence intensity during cell staining |
|---|---|---|---|---|---|
| Example 25 | Colorant for fluorescent labeling 1 | Colorant solution 1 | 3 | 4 | 2 |
| Example 26 | Colorant for fluorescent labeling 2 | Colorant solution 2 | 3 | 4 | 2 |
| Example 27 | Colorant for fluorescent labeling 3 | Colorant solution 3 | 3 | 4 | 2 |
| Example 28 | Colorant for fluorescent labeling 4 | Colorant solution 4 | 4 | 4 | 3 |
| Example 29 | Colorant for fluorescent labeling 5 | Colorant solution 5 | 3 | 4 | 2 |
| Example 30 | Colorant for fluorescent labeling 6 | Colorant solution 6 | 4 | 4 | 3 |
| Example 31 | Colorant for fluorescent labeling 7 | Colorant solution 7 | 3 | 4 | 4 |
| Example 32 | Colorant for fluorescent labeling 8 | Colorant solution 8 | 3 | 4 | 4 |
| Example 33 | Colorant for fluorescent labeling 9 | Colorant solution 9 | 3 | 4 | 4 |
| Example 34 | Colorant for fluorescent labeling 10 | Colorant solution 10 | 4 | 4 | 4 |
| Example 35 | Colorant for fluorescent labeling 11 | Colorant solution 11 | 3 | 4 | 4 |
| Example 36 | Colorant for fluorescent labeling 12 | Colorant solution 12 | 4 | 4 | 3 |
| Example 37 | Colorant for fluorescent labeling 13 | Colorant solution 13 | 2 | 3 | 2 |
| Example 38 | Colorant for fluorescent labeling 14 | Colorant solution 14 | 2 | 3 | 2 |
| Example 39 | Colorant for fluorescent labeling 15 | Colorant solution 15 | 3 | 4 | 4 |

(continued)

| | Colorant for fluorescent labeling | Colorant solution | Average particle size | Absorbance retention | Fluorescence intensity during cell staining |
|---|---|---|---|---|---|
| Example 40 | Colorant for fluorescent labeling 16 | Colorant solution 16 | 3 | 4 | 4 |
| Example 41 | Colorant for fluorescent labeling 17 | Colorant solution 17 | 2 | 3 | 2 |
| Example 42 | Colorant for fluorescent labeling 18 | Colorant solution 18 | 2 | 3 | 2 |
| Example 43 | Colorant for fluorescent labeling 19 | Colorant solution 19 | 3 | 4 | 3 |
| Example 44 | Colorant for fluorescent labeling 20 | Colorant solution 20 | 3 | 4 | 4 |
| Example 45 | Colorant for fluorescent labeling 21 | Colorant solution 21 | 3 | 4 | 4 |
| Example 46 | Colorant for fluorescent labeling 22 | Colorant solution 22 | 3 | 4 | 3 |
| Example 47 | Colorant for fluorescent labeling 23 | Colorant solution 23 | 3 | 4 | 4 |
| Example 48 | Colorant for fluorescent labeling 24 | Colorant solution 24 | 3 | 4 | 4 |
| | | | | | |
| Comparative Example 7 | Comparative compound 1 | Colorant solution 25 | 1 | 1 | 1 |
| Comparative Example 8 | Comparative compound 2 | Colorant solution 26 | 1 | 1 | 1 |
| Comparative Example 9 | Comparative compound 3 | Colorant solution 27 | 1 | 1 | 1 |
| Comparative Example 10 | Comparative compound 4 | Colorant solution 28 | 2 | 1 | 1 |
| Comparative Example 11 | Comparative compound 5 | Colorant solution 29 | 1 | 1 | 1 |

(continued)

| | Colorant for fluorescent labeling | Colorant solution | Average particle size | Absorbance retention | Fluorescence intensity during cell staining |
|---|---|---|---|---|---|
| Comparative Example 12 | Comparative compound 6 | Colorant solution 30 | 2 | 2 | 1 |

## Claims

1. A colorant for fluorescent labeling, in which a colorant dispersed component has an average particle size of 500 nm or less, and is formed as a colorant dispersion (colorant dispersion I) in which a colorant solution obtained by dissolving a colorant for fluorescent labeling in an organic solvent is added to phosphate buffered saline (PBS), and which has an absorbance retention calculated by Formula (I) as follows of 0.5 or more:

$$\text{Formula (I)} \qquad \text{absorbance retention} = A_1/A_0$$

[wherein, in Formula (I), $A_0$ represents an absorbance at a maximum-absorption wavelength of a colorant solution (colorant solution I) obtained by dissolving a colorant for fluorescent labeling in an organic solvent, and $A_1$ represents an absorbance at a maximum-absorption wavelength of a colorant dispersion (colorant dispersion II) obtained by adding a colorant solution for fluorescent labeling to PBS, where, colorant concentrations of the colorant solution I and the colorant dispersion II are the same].

2. The colorant for fluorescent labeling according to claim 1, wherein the colorant for fluorescent labeling is a phthalocyanine or boron dipyrromethene.

3. The colorant for fluorescent labeling according to claim 1 or 2, wherein the colorant for fluorescent labeling is represented by General Formula (1) as follows:

General Formula (1): $Q\text{-}Z\text{-}L^1\text{-}L^2\text{-}L^3$

[wherein, in General Formula (1), Q represents a residue of the colorant for fluorescent labeling,

Z represents a direct bond, a substituted or unsubstituted alkylene group, or a substituted or unsubstituted arylene group,
$L^1$ represents a direct bond, -O-, $-OP(=O)R^1-$, -OC(=O)-, $-OS(=O)_2-$, $-OSiR^2R^3-$, -C(=O)-, or -C(=O)NH-,
$L^2$ represents one group selected from a group consisting of a substituted or unsubstituted alkylene group, a substituted or unsubstituted arylene group, and a substituted or unsubstituted heterocyclic group, or a group formed by combining these groups,
$L^3$ represents $-COOM^1$, $-NR^4R^5$, $-N^+R^6R^7R^8$, $-OM^2$, or $-P(=O)(OM^3)OM^4$,
$R^1$ represents a hydrogen atom, a hydroxyl group, a substituted or unsubstituted alkyl group, a substituted or unsubstituted aryl group, a substituted or unsubstituted alkoxy group, a substituted or unsubstituted aryloxy group, or a substituted or unsubstituted heterocyclic group,
$R^2$ and $R^3$ each independently represent a substituted or unsubstituted alkyl group, a substituted or unsubstituted aryl group, or a substituted or unsubstituted heterocyclic group,
$R^4$ to $R^8$ each independently represent a hydrogen atom, a substituted or unsubstituted alkyl group, or a substituted or unsubstituted aryl group, and
$M^1$, $M^2$, $M^3$, and $M^4$ each independently represent a hydrogen atom or a monovalent cation].

4. A fluorescent labeling agent containing the colorant for fluorescent labeling according to any one of claims 1 to 3.

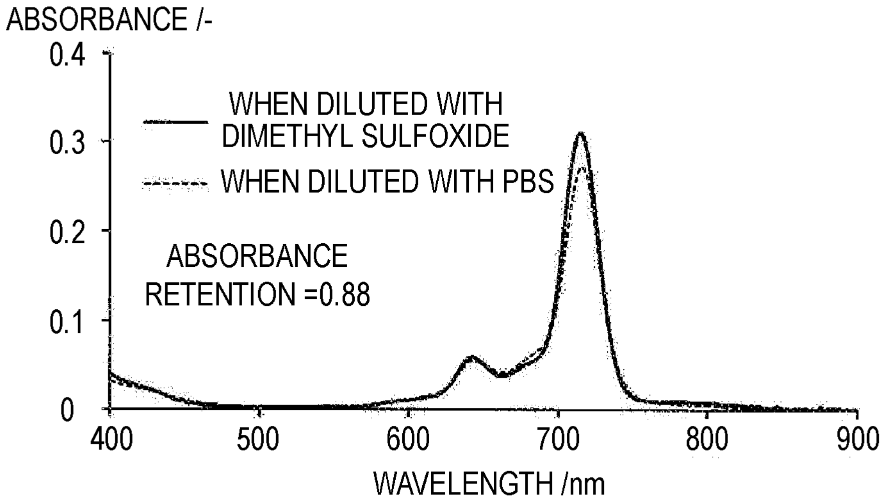
ABSORBANCE /-
0.4
0.3
0.2
0.1
0
WHEN DILUTED WITH DIMETHYL SULFOXIDE
WHEN DILUTED WITH PBS
ABSORBANCE RETENTION =0.88
400
500
600
700
800
900
WAVELENGTH /nm

FIG. 1

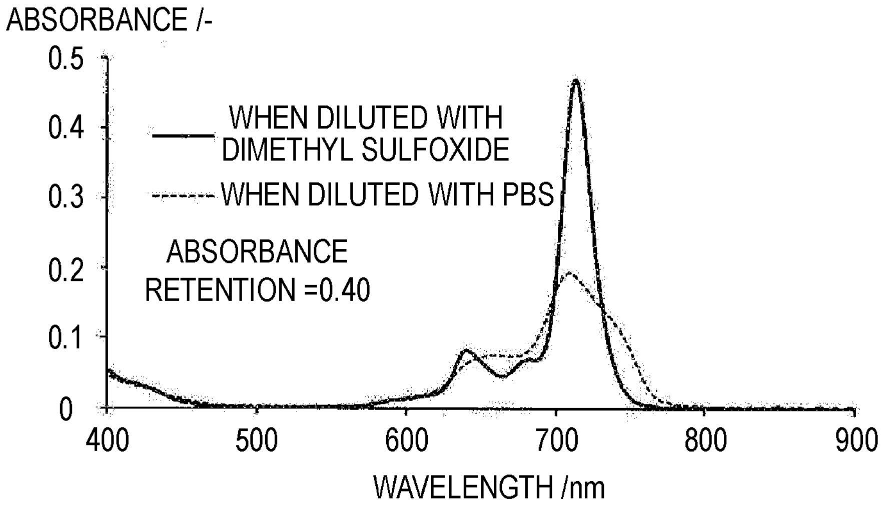
ABSORBANCE /-
0.5
0.4
0.3
0.2
0.1
0
WHEN DILUTED WITH DIMETHYL SULFOXIDE
WHEN DILUTED WITH PBS
ABSORBANCE RETENTION =0.40
400
500
600
700
800
900
WAVELENGTH /nm

FIG. 2

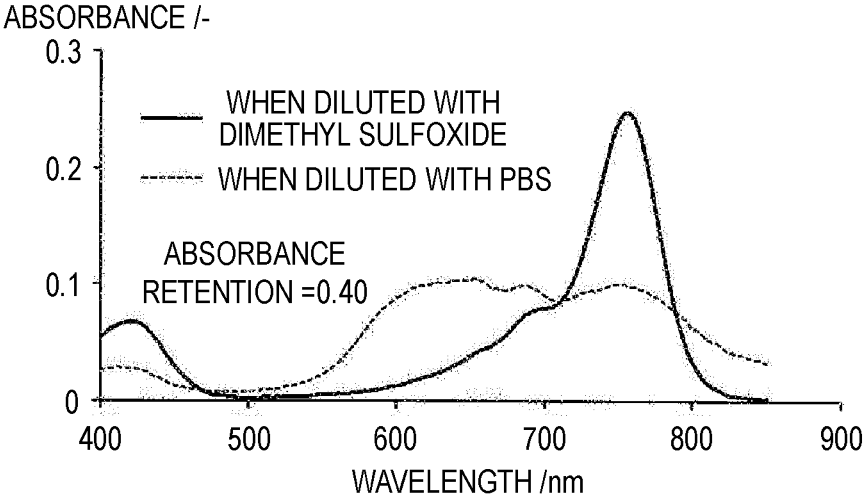
ABSORBANCE /-
0.3
0.2
0.1
0
WHEN DILUTED WITH DIMETHYL SULFOXIDE
WHEN DILUTED WITH PBS
ABSORBANCE RETENTION =0.40
400
500
600
700
800
900
WAVELENGTH /nm

FIG. 3

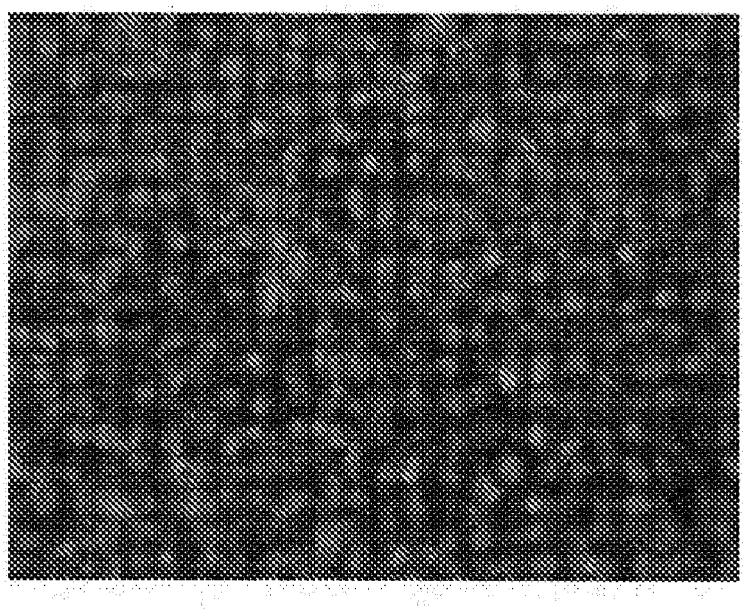

FIG. 4

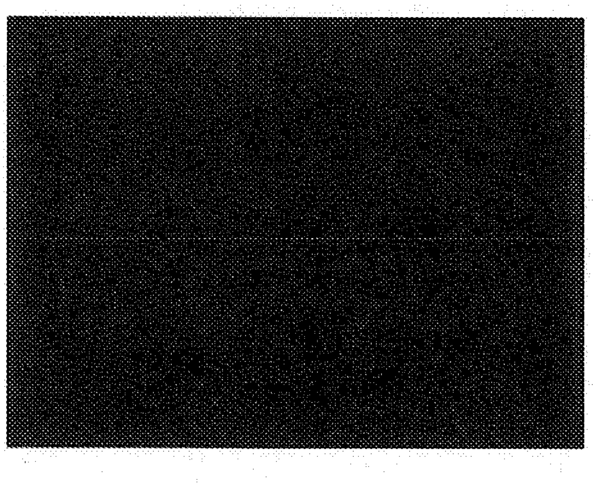

FIG. 5

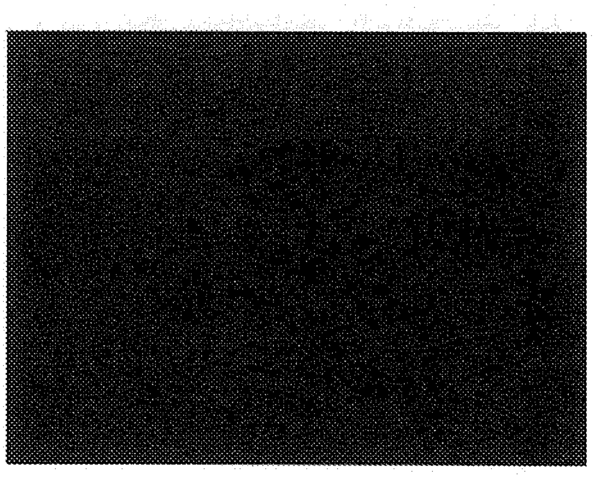

FIG. 6

**INTERNATIONAL SEARCH REPORT**

International application No.
**PCT/JP2022/037255**

**A. CLASSIFICATION OF SUBJECT MATTER**

***C09B 47/067***(2006.01)i; ***C09B 47/18***(2006.01)i; ***C09B 47/24***(2006.01)i; ***C09B 47/30***(2006.01)i; ***C09K 11/06***(2006.01)i; ***C09B 57/00***(2006.01)i; ***G01N 21/78***(2006.01)i
FI: C09B47/30 CSP; C09B47/067; C09B47/18; C09B47/24; C09B57/00 Z; C09K11/06; G01N21/78 C

According to International Patent Classification (IPC) or to both national classification and IPC

**B. FIELDS SEARCHED**

Minimum documentation searched (classification system followed by classification symbols)

C09B47/067; C09B47/18; C09B47/24; C09B47/30; C09K11/06; C09B57/00; G01N21/78

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 5-163439 A (HITACHI CHEMICAL CO., LTD.) 29 June 1993 (1993-06-29) claims, tables 1-9, paragraphs [0031]-[0033] | 1-4 |
| X | JP 2019-172826 A (FUJIFILM CORP.) 10 October 2019 (2019-10-10) claims, paragraphs [0064]-[0126] | 1-4 |
| X | JP 2020-177014 A (TOYO INK SC HOLDINGS CO., LTD.) 29 October 2020 (2020-10-29) claims, paragraphs [0101]-[0107], [0129] | 1-4 |
| A | US 2012/0323164 A1 (MALCOLM, Kenny E.) 20 December 2012 (2012-12-20) claims | 1-4 |
| A | JP 2020-23676 A (TOYO INK SC HOLDINGS CO., LTD.) 13 February 2020 (2020-02-13) paragraph [0062] | 1-4 |
| P, X | WO 2021/201284 A1 (TOYO INK SC HOLDINGS CO., LTD.) 07 October 2021 (2021-10-07) claims | 1-4 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 December 2022** | **20 December 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

INTERNATIONAL SEARCH REPORT

International application No.
PCT/JP2022/037255

C. DOCUMENTS CONSIDERED TO BE RELEVANT

| Category* | Citation of document, with indication, where appropriate, of the relevant passages | Relevant to claim No. |
|---|---|---|
| P, X | JP 2021-193353 A (TOYO INK SC HOLDINGS CO., LTD.) 23 December 2021 (2021-12-23) claims | 1-4 |

Form PCT/ISA/210 (second sheet) (January 2015)

**INTERNATIONAL SEARCH REPORT**
**Information on patent family members**

International application No.
**PCT/JP2022/037255**

| Patent document cited in search report | Publication date (day/month/year) | Patent family member(s) | Publication date (day/month/year) |
|---|---|---|---|
| JP 5-163439 A | 29 June 1993 | US 5438135 A<br>claims, tables 1-9, column 35, line 32 to column 37, line 10<br>EP 502723 A2 | |
| JP 2019-172826 A | 10 October 2019 | (Family: none) | |
| JP 2020-177014 A | 29 October 2020 | (Family: none) | |
| US 2012/0323164 A1 | 20 December 2012 | (Family: none) | |
| JP 2020-23676 A | 13 February 2020 | (Family: none) | |
| WO 2021/201284 A1 | 07 October 2021 | (Family: none) | |
| JP 2021-193353 A | 23 December 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2004038378 A
- JP 2019172826 A
- JP 2021164190 A